# EUROPEAN PATENT SPECIFICATION

(11) **EP 4 600 860 B1**
(45) Date of publication and mention of the grant of the patent: **12.08.2026**
(21) Application number: 23874689.5
(22) Date of filing: 25.09.2023
(51) Int. Cl.: G06F 30/27, G02B 5/32, G03H 1/02, G03H 1/08, G02B 27/00, G03H 1/00, G06N 3/067, G06N 3/08, G03H 1/26, G02B 27/42, G06F 111/10, G06N 3/045, G06N 3/0455, G06N 3/0464, G06N 3/084, G06N 3/09, G06N 3/0985, G06N 3/126, G06N 5/01, G06N 20/00, G06N 20/20

(54) **METHOD OF DESIGNING HOLOGRAPHIC OPTICAL SYSTEM AND HOLOGRAPHIC OPTICAL SYSTEM DESIGNING PROGRAM**
VERFAHREN ZUM ENTWURF EINES HOLOGRAFISCHEN OPTISCHEN SYSTEMS UND PROGRAMM ZUM ENTWURF EINES HOLOGRAFISCHEN OPTISCHEN SYSTEMS
PROCÉDÉ DE CONCEPTION DE SYSTÈME OPTIQUE HOLOGRAPHIQUE ET PROGRAMME DE CONCEPTION DE SYSTÈME OPTIQUE HOLOGRAPHIQUE

(30) Priority: 04.10.2022 JP 2022160047
(43) Date of publication of application: 13.08.2025
(73) Proprietor: NATIONAL INSTITUTE OF INFORMATION AND COMMUNICATIONS TECHNOLOGY, Tokyo 184-8795 (JP)
(72) Inventor: HOSHI, Ikuo, Koganei-shi, Tokyo 184-8795 (JP); ICHIHASHI, Yasuyuki, Koganei-shi, Tokyo 184-8795 (JP); OI, Ryutaro, Koganei-shi, Tokyo 184-8795 (JP); WAKUNAMI, Koki, Koganei-shi, Tokyo 184-8795 (JP)
(74) Representative: De Clercq & Partners
(86) International application number: PCT/JP2023/034664
(87) International publication number: WO 2024/075561

(56) References cited:
- JP-A- 2018 180 261
- JP-A- 2020 112 756
- XING LIN ET AL: "All-optical machine learning using diffractive deep neural networks", SCIENCE ADVANCES, vol. 361, no. 6406, 7 September 2018 (2018-09-07), US, pages 1004 - 1008, XP055711299, ISSN: 0036-8075, DOI: 10.1126/science.aat8084
- HOSHI IKUO ET AL: "Machine learning for the design of two-layer holographic optical elements", 20240313, vol. 12903, 13 March 2024 (2024-03-13), pages 129030M - 129030M, XP060201325, ISSN: 0277-786X, ISBN: 978-1-5106-7066-2, DOI: 10.1117/12.3001349
- HOSHI IKUO ET AL: "Wavefront-aberration-tolerant diffractive deep neural networks using volume holographic optical elements", SCIENTIFIC REPORTS, vol. 15, no. 1, 7 January 2025 (2025-01-07), US, pages 1 - 13, XP093335153, ISSN: 2045-2322, Retrieved from the Internet <URL:https://www.nature.com/articles/s41598-024-82791-z.pdf> DOI: 10.1038/s41598-024-82791-z
- DENIZ MENGU; YI LUO; YAIR RIVENSON; AYDOGAN OZCAN: "Analysis of Diffractive Optical Neural Networks and Their Integration with Electronic Neural Networks", ARXIV.ORG, CORNELL UNIVERSITY LIBRARY, 201 OLIN LIBRARY CORNELL UNIVERSITY ITHACA, NY 14853, 3 October 2018 (2018-10-03), 201 Olin Library Cornell University Ithaca, NY 14853 , XP081368349, DOI: 10.1109/JSTQE.2019.2921376

## Description

### TECHNICAL FIELD

The present disclosure relates to a method of designing a holographic optical system and a holographic optical system designing program.

### BACKGROUND ART

X. Lin, Y. Rivenson, N. T. Yardimci, M. Veli, Y. Luo, M. Jarrahi, and A. Ozcan, "All-optical machine learning using diffractive deep neural networks", Science, 2018, Vol. 361 No. 6406, pp. 1004-1008 (NPL 1) disclose a method of performing machine learning for a phase distribution of each of a plurality of diffraction layers by an optical diffractive deep neural network (D²NN).

### CITATION LIST

### NON PATENT LITERATURE

NPL 1: X. Lin, Y. Rivenson, N. T. Yardimci, M. Veli, Y. Luo, M. Jarrahi, and A. Ozcan, "All-optical machine learning using diffractive deep neural networks", Science, 2018, Vol. 361 No. 6406, pp. 1004-1008

### SUMMARY OF INVENTION

### TECHNICAL PROBLEM

However, since the plurality of diffraction layers are arranged in series in a straight optical path of light in NPL 1, zeroth-order diffracted light generated at each of the plurality of diffraction layers is overlapped with an output plane. When the zeroth-order diffracted light is overlapped with the output plane, a signal-to-noise ratio (SN ratio) of the output of the holographic optical system is decreased, disadvantageously. An object of the present disclosure is to provide a method of designing a holographic optical system and a holographic optical system designing program so as to efficiently design a holographic optical system, which includes a plurality of holographic optical elements arranged optically in series and in which zeroth-order diffracted light generated at each of the plurality of holographic optical elements can be prevented from being overlapped with an output plane.

### SOLUTION TO PROBLEM

In a method of designing a holographic optical system using a holographic optical system model according to a first aspect of the present disclosure, the holographic optical system model includes an input plane, a plurality of holographic optical elements arranged optically in series, and an output plane. The method of designing the holographic optical system according to the first aspect of the present disclosure includes the steps of: receiving an optical condition including the number of the plurality of holographic optical elements, a size of each of the plurality of holographic optical elements, arrangements of the input plane, the plurality of holographic optical elements and the output plane, and a wavelength of light traveling via each of the plurality of holographic optical elements; and generating the holographic optical system model that satisfies the number of the plurality of holographic optical elements, the size of each of the plurality of holographic optical elements, and the arrangements of the input plane, the plurality of holographic optical elements and the output plane in the optical condition. The input plane, the plurality of holographic optical elements, and the output plane are arranged to avoid zeroth-order diffracted light from being overlapped with the output plane, the zeroth-order diffracted light being generated at each of the plurality of holographic optical elements by the light traveling from the input plane toward the output plane via the plurality of holographic optical elements. The method of designing the holographic optical system according to the first aspect of the present disclosure includes: setting an initial phase distribution to each of the plurality of holographic optical elements so as to allow the light to travel from the input plane via the plurality of holographic optical elements and exit to the output plane; and performing machine learning for the holographic optical system model in which the initial phase distribution has been set, by optimizing a phase distribution of each of the plurality of holographic optical elements with respect to the light.

In a method of designing a holographic optical system using a holographic optical system model according to a second aspect of the present disclosure, the holographic optical system model includes an input plane, a plurality of holographic optical elements arranged optically in series, and an output plane. The method of designing the holographic optical system according to the second aspect of the present disclosure includes the step of receiving an optical condition including the number of the plurality of holographic optical elements, a size of each of the plurality of holographic optical elements, arrangements of the input plane, the plurality of holographic optical elements and the output plane, and wavelengths of a plurality of wavelength components traveling via the plurality of holographic optical elements. The wavelengths of the plurality of wavelength components are different from each other. The method of designing the holographic optical system according to the second aspect of the present disclosure includes the step of generating a plurality of holographic optical system sub-models. Each of the plurality of holographic optical system sub-models includes the input plane, the plurality of holographic optical elements, and the output plane. Each of the plurality of holographic optical system sub-models satisfies the number of the plurality of holographic optical elements, the size of each of the plurality of holographic optical elements, and the arrangements of the input plane, the plurality of holographic optical elements and the output plane in the optical condition. Each of the plurality of holographic optical system sub-models is a holographic optical system sub-model for a corresponding wavelength component of the plurality of wavelength components. The input plane, the plurality of holographic optical elements, and the output plane of each of the plurality of holographic optical system sub-models are arranged to avoid zeroth-order diffracted light from being overlapped with the output plane of each of the plurality of holographic optical system sub-models, the zeroth-order diffracted light being generated at each of the plurality of holographic optical elements of each of the plurality of holographic optical system sub-models by the corresponding wavelength component traveling from the input plane of each of the plurality of holographic optical system sub-models toward the output plane of each of the plurality of holographic optical system sub-models via the plurality of holographic optical elements of each of the plurality of holographic optical system sub-models. The method of designing the holographic optical system according to the second aspect of the present disclosure includes the steps of: setting an initial phase distribution for the corresponding wavelength component to each of the plurality of the holographic optical elements of each of the plurality of holographic optical system sub-models so as to allow the corresponding wavelength component to travel from the input plane of each of the plurality of holographic optical system sub-models via the plurality of holographic optical elements of each of the plurality of holographic optical system sub-models and exit to the output plane of each of the plurality of holographic optical system sub-models; performing machine learning for each of the plurality of holographic optical system sub-models in each of which the initial phase distribution has been set, by optimizing a phase distribution of each of the plurality of holographic optical elements of each of the plurality of holographic optical system sub-models for the corresponding wavelength component; and generating the holographic optical system model from the plurality of holographic optical system sub-models having been through the machine learning. The input plane, the plurality of holographic optical elements and the output plane of the holographic optical system model are arranged to avoid zeroth-order diffracted light from being overlapped with the output plane of the holographic optical system model, the zeroth-order diffracted light being generated at each of the plurality of holographic optical elements of the holographic optical system model by each of the plurality of wavelength components traveling from the input plane of the holographic optical system model toward the output plane of the holographic optical system model via the plurality of holographic optical elements of the holographic optical system model. The method of designing the holographic optical system according to the second aspect of the present disclosure includes the step of performing machine learning for the holographic optical system model by optimizing a phase distribution of each of the plurality of holographic optical elements of the holographic optical system model with respect to each of the plurality of wavelength components.

A holographic optical system designing program according to the present disclosure causes a processor to perform each step of the method of designing the holographic optical system according to the present disclosure.

### ADVANTAGEOUS EFFECTS OF INVENTION

According to the method of designing the holographic optical system in the present disclosure and the holographic optical system designing program in the present disclosure, it is possible to efficiently design a holographic optical system in which zeroth-order diffracted light generated at each of a plurality of holographic optical elements can be prevented from being overlapped with an output plane.

### BRIEF DESCRIPTION OF DRAWINGS

Fig. 1 is a schematic diagram showing an exemplary hardware configuration of a holographic optical system designing device according to a first embodiment.
Fig. 2 is a schematic diagram showing an exemplary functional configuration of the holographic optical system designing device according to the first embodiment.
Fig. 3 is a diagram showing a flowchart of a method of designing a holographic optical system according to the first embodiment.
Fig. 4 is a schematic diagram showing a step of generating a holographic optical system model in the method of designing the holographic optical system according to the first embodiment.
Fig. 5 is a schematic diagram showing a step of setting an initial phase distribution to each of a plurality of holographic optical elements in the method of designing the holographic optical system according to the first embodiment.
Fig. 6 is a schematic diagram showing the step of setting the initial phase distribution to each of the plurality of holographic optical elements in the method of designing the holographic optical system according to the first embodiment.
Fig. 7 is a schematic diagram showing the step of setting the initial phase distribution to each of the plurality of holographic optical elements in the method of designing the holographic optical system according to the first embodiment.
Fig. 8 is a schematic diagram showing a step of performing machine learning for the holographic optical system model in the method of designing the holographic optical system according to the first embodiment.
Fig. 9 is a block diagram for illustrating a content of processing in a phase distribution machine learning unit according to the first embodiment.
Fig. 10 is a diagram showing a flowchart of the step of performing the machine learning for the holographic optical system model according to the first embodiment.
Fig. 11 is a diagram showing a flowchart of a step of optimizing a phase distribution of each of the plurality of holographic optical elements according to the first embodiment.
Fig. 12 is a schematic diagram showing a holographic optical system model according to a first modification of the first embodiment.
Fig. 13 is a schematic diagram showing a holographic optical system model according to a second modification of the first embodiment.
Fig. 14 is a schematic diagram showing a holographic optical system model according to a third modification of the first embodiment.
Fig. 15 is a schematic diagram showing a step of setting an initial phase distribution to each of a plurality of holographic optical elements in a method of designing a holographic optical system according to a fourth modification of the first embodiment.
Fig. 16 is a schematic diagram showing the step of setting the initial phase distribution to each of the plurality of holographic optical elements in the method of designing the holographic optical system according to the fourth modification of the first embodiment.
Fig. 17 is a schematic diagram showing an exemplary hardware configuration of a holographic optical system designing device according to a second embodiment.
Fig. 18 is a schematic diagram showing an exemplary functional configuration of the holographic optical system designing device according to the second embodiment.
Fig. 19 is a diagram showing a flowchart of a method of designing a holographic optical system according to the second embodiment.
Fig. 20 is a schematic diagram showing a step of generating a holographic optical system model in the method of designing the holographic optical system according to the second embodiment.
Fig. 21 is a schematic diagram showing a step of setting an initial phase distribution to each of a plurality of holographic optical elements in the method of designing the holographic optical system according to the second embodiment.
Fig. 22 is a schematic diagram showing a step of performing machine learning for the holographic optical system model in the method of designing the holographic optical system according to the second embodiment.
Fig. 23 is a block diagram for illustrating a content of processing in a phase distribution machine learning unit according to the second embodiment.
Fig. 24 is a diagram showing a flowchart of the step of performing the machine learning for the holographic optical system model according to the second embodiment.
Fig. 25 is a diagram showing a flowchart of a step of optimizing a phase distribution of each of the plurality of holographic optical elements according to the second embodiment.
Fig. 26 is a diagram showing a flowchart of the step of optimizing the phase distribution of each of the plurality of holographic optical elements according to the second embodiment.
Fig. 27 is a schematic diagram showing an exemplary hardware configuration of a holographic optical system designing device according to a third embodiment.
Fig. 28 is a schematic diagram showing an exemplary functional configuration of the holographic optical system designing device according to the third embodiment.
Fig. 29 is a diagram showing a flowchart of a method of designing a holographic optical system according to the third embodiment.
Fig. 30 is a block diagram for illustrating a content of processing in a phase distribution machine learning unit according to the third embodiment.
Fig. 31 is a block diagram for illustrating the content of processing in the phase distribution machine learning unit according to the third embodiment.
Fig. 32 is a block diagram for illustrating the content of processing in the phase distribution machine learning unit according to the third embodiment.

### DESCRIPTION OF EMBODIMENTS

Hereinafter, embodiments will be described. It should be noted that the same configurations are denoted by the same reference characters, and will not be described repeatedly.

### (First Embodiment)

### <Hardware Configuration>

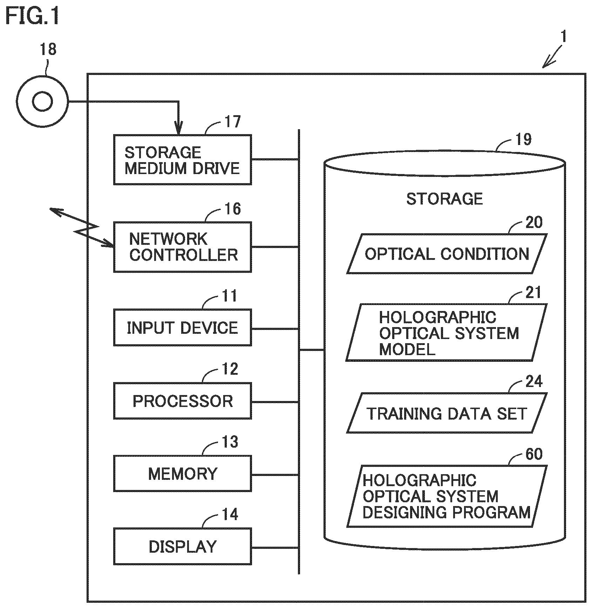

A hardware configuration of a holographic optical system designing device 1 will be described with reference to Fig. 1. Holographic optical system designing device 1 is a computer for designing a holographic optical system using a holographic optical system model 21 (see Figs. 1, 4 to 9, and the like). The holographic optical system is applicable to, for example, an off-axis imaging optical system such as an image transmission optical system, a character recognition optical system such as an optical system for recognizing a handwritten character, an optical system for data sorting, an optical system for reducing noise included in an image so as to improve a signal-to-noise ratio (SN ratio) of the image, an imaging optical system, or a display.

Holographic optical system designing device 1 includes, as main hardware elements, an input device 11, a processor 12, a memory 13, a display 14, a network controller 16, a storage medium drive 17, and a storage 19.

Input device 11 receives various input operations. Input device 11 is, for example, a keyboard, a mouse, a touch panel, a pen, or the like.

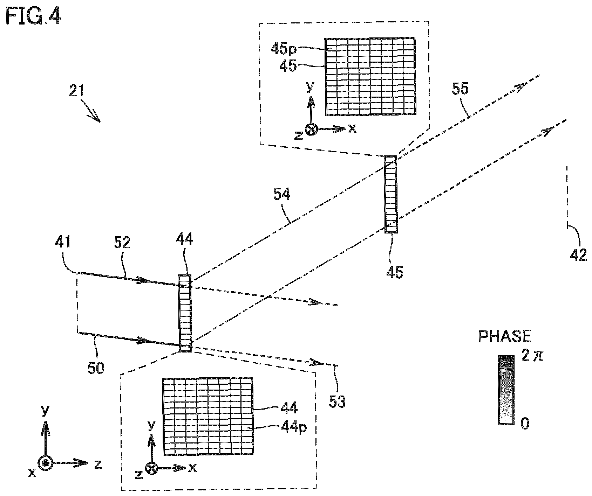

Display 14 displays information or the like necessary for processing in holographic optical system designing device 1. Display 14 displays, for example, a below-described optical condition 20 and a phase distribution of each of a plurality of holographic optical elements 44, 45 (see Figs. 4, 5, and 8) of holographic optical system model 21. In the present specification, each of the holographic optical elements (HOEs) means a refractive index modulation type diffractive optical element, rather than a relief type diffractive optical element. Display 14 is, for example, an LCD (Liquid Crystal Display) or an organic EL (Electroluminescence) display.

Processor 12 is an arithmetic entity that executes various programs including a holographic optical system designing program 60 so as to perform processing necessary to implement functions of holographic optical system designing device 1. Processor 12 is constituted of, for example, a CPU (central processing unit), a GPU (graphics processing unit), or the like.

Memory 13 provides a storage area for temporarily storing a program code, a work memory, or the like when processor 12 executes a program. Memory 13 is, for example, a volatile memory device such as a DRAM (Dynamic Random Access Memory) or a SRAM (Static Random Access Memory).

Network controller 16 transmits and receives a program or data (for example, optical condition 20, a training data set 24, an initial phase distribution of each of the plurality of holographic optical elements 44, 45, an optimized phase distribution of each of the plurality of holographic optical elements 44, 45, and the like) to and from an external device (not shown) via a communication network (not shown). Network controller 16 supports any communication method such as Ethernet (registered trademark), wireless LAN (Local Area Network), or Bluetooth (registered trademark), for example.

Storage medium drive 17 reads a program or data stored in storage medium 18. Storage medium drive 17 may further write a program or data into storage medium 18. Storage medium 18 is a non-transitory storage medium, and stores a program or data in a non-volatile manner. Storage medium 18 is, for example, an optical storage medium such as an optical disk (for example, a CD-ROM (Compact Disc Read Only Memory) or a DVD (Digital Versatile Disc)), a semiconductor storage medium such as a flash memory or a USB memory, a magnetic storage medium such as a hard disk, a FD (Floppy Disk), or a storage tape, or a magneto-optical storage medium such as a MO (Magneto-Optical) disk.

Storage 19 stores optical condition 20, holographic optical system model 21, training data set 24, various programs (including holographic optical system designing program 60) to be executed by processor 12, and the like. Storage 19 is, for example, a nonvolatile memory device such as a hard disk or an SSD (solid state drive).

Holographic optical system model 21 is generated on a computer (holographic optical system designing device 1). As shown in Figs. 4 to 8, holographic optical system model 21 includes an input plane 41, a plurality of holographic optical elements 44, 45, and an output plane 42. Holographic optical system model 21 according to the present embodiment is a holographic optical system model for light 50, by which a phase distribution for light 50 can be provided to each of the plurality of holographic optical elements 44, 45. In the present embodiment, light 50 has a single wavelength component, and holographic optical system model 21 is a holographic optical system model for the single wavelength component.

Optical condition 20 includes, for example, the number of the plurality of holographic optical elements 44, 45, a size of each of the plurality of holographic optical elements 44, 45, arrangements of input plane 41, the plurality of holographic optical elements 44, 45 and output plane 42, and a wavelength of light 50 traveling via the plurality of holographic optical elements 44, 45. As shown in Figs. 4 to 8, in one example of the present embodiment, the number of the plurality of holographic optical elements 44, 45 is two, and each of all of the plurality of holographic optical elements 44, 45 is a transmission type holographic optical element. Moreover, light 50 has the single wavelength component.

The size of each of the plurality of holographic optical elements 44, 45 is the size of a region in which pixels are two-dimensionally arranged. For example, the size of holographic optical element 44 is the size of a region in which pixels 44p (see Figs. 4, 5, and 8) are two-dimensionally arranged. The size of holographic optical element 45 is the size of a region in which pixels 45p are two-dimensionally arranged. Each of pixels 44p, 45p is a minimum unit that defines a phase distribution of a corresponding one of the plurality of holographic optical elements 44, 45 on the computer (holographic optical system designing device 1). The size of each of the plurality of holographic optical elements 44, 45 is the size of a region for which the phase distribution of a corresponding one of the plurality of holographic optical elements 44, 45 is calculated on holographic optical system designing device 1 (computer).

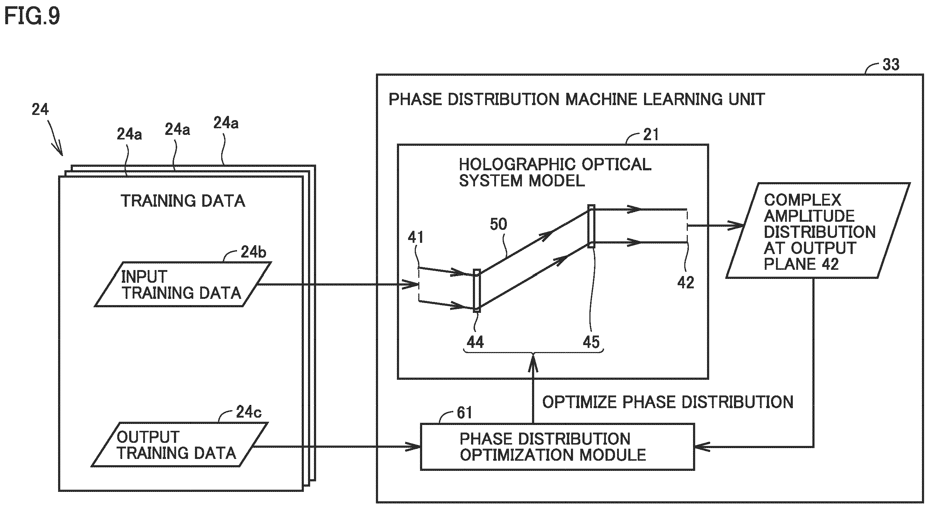

Training data set 24 is a training data set for light 50 and includes a plurality of pieces of training data 24a (see Fig. 9). Each of the plurality of pieces of training data 24a includes input training data 24b (see Fig. 9) and output training data 24c (see Fig. 9) corresponding to input training data 24b.

A program for implementing a function of holographic optical system designing device 1, such as holographic optical system designing program 60, may be stored in storage medium 18, may be distributed, and may be installed in storage 19 from storage medium 18, or may be downloaded to holographic optical system designing device 1 via the Internet or an intranet.

In the present embodiment, it is illustratively shown that a general-purpose computer (processor 12) executes the programs to implement the functions of holographic optical system designing device 1. A whole or part of the functions of holographic optical system designing device 1 may be implemented using a hard-wired circuit such as an integrated circuit. For example, the whole or part of the functions of holographic optical system designing device 1 may be implemented using an ASIC (Application Specific Integrated Circuit), an FPGA (Field Programmable Gate Array), or the like.

### <Functional Configuration>

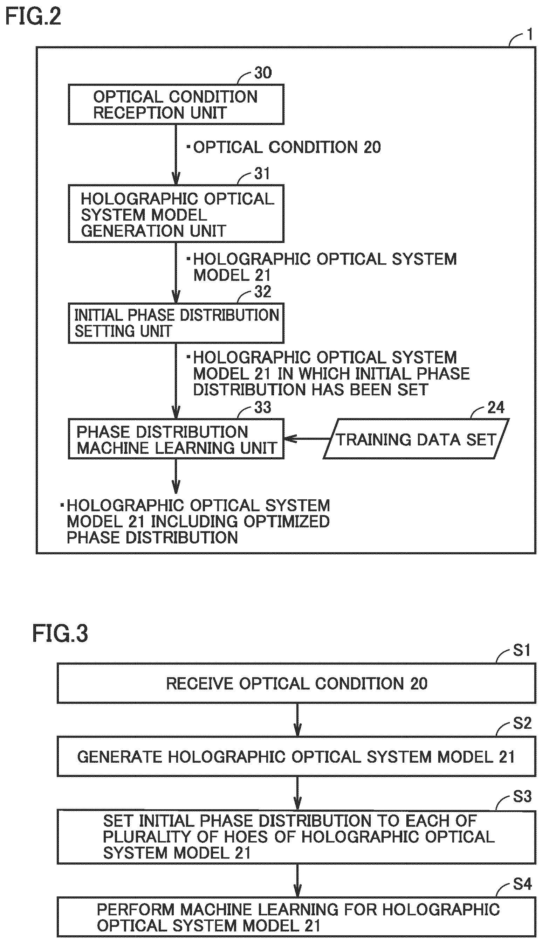

An exemplary functional configuration of holographic optical system designing device 1 will be described with reference to Fig. 2. Holographic optical system designing device 1 according to the present embodiment includes an optical condition reception unit 30, a holographic optical system model generation unit 31, an initial phase distribution setting unit 32, and a phase distribution machine learning unit 33.

Referring to Fig. 2, optical condition reception unit 30 receives optical condition 20 from an operator or the like of holographic optical system designing device 1. Optical condition reception unit 30 outputs optical condition 20 to storage 19. Optical condition 20 is stored into storage 19 (see Fig. 1). Optical condition 20 may be stored into storage medium 18 (see Fig. 1).

Referring to Fig. 2, holographic optical system model generation unit 31 generates holographic optical system model 21 on the computer (holographic optical system designing device 1) in accordance with the number of the plurality of holographic optical elements 44, 45, the size of each of the plurality of holographic optical elements 44, 45, and the arrangements of input plane 41, the plurality of holographic optical elements 44, 45 and output plane 42 in optical condition 20.

As shown in Fig. 4, the plurality of holographic optical elements 44, 45 are arranged to be off-axis from each other. By light 50 traveling from input plane 41 toward output plane 42 via the plurality of holographic optical elements 44, 45, zeroth-order diffracted light 53 and zeroth-order diffracted light 55 are generated at the plurality of holographic optical elements 44, 45. Input plane 41, the plurality of holographic optical elements 44, 45, and output plane 42 are arranged to avoid each of zeroth-order diffracted light 53 and zeroth-order diffracted light 55 from being overlapped with output plane 42. In the present specification, the traveling of light 50 via a holographic optical element means that light 50 passes through the holographic optical element when the holographic optical element is a transmission type holographic optical element, and means that light 50 is reflected by the holographic optical element when the holographic optical element is a reflection type holographic optical element.

Referring to Fig. 2, from holographic optical system model 21 generated by holographic optical system model generation unit 31, initial phase distribution setting unit 32 generates holographic optical system model 21 in which an initial phase distribution has been set. For example, the operator inputs the initial phase distribution of each of the plurality of holographic optical elements 44, 45 into holographic optical system designing device 1 (see Fig. 1) using input device 11 (see Fig. 1). Initial phase distribution setting unit 32 receives the initial phase distribution input by the operator. Initial phase distribution setting unit 32 sets the initial phase distribution to each of the plurality of holographic optical elements 44, 45 of holographic optical system model 21. In this way, holographic optical system model 21 in which the initial phase distribution has been set is generated.

Initial phase distribution setting unit 32 sets the initial phase distribution to each of the plurality of holographic optical elements 44, 45 so as to allow light 50 to travel from input plane 41 via the plurality of holographic optical elements 44, 45 and exit to output plane 42. When light 50 travels via each of the plurality of holographic optical elements 44, 45, the wavefront of light 50 is changed by the initial phase distribution of each of the plurality of holographic optical elements 44, 45. Light 50 is diffracted at each of the plurality of holographic optical elements 44, 45. Light 50 travels via each of the plurality of holographic optical elements 44, 45 as non-zeroth-order diffracted light (for example, first-order diffracted light or the like) at each of the plurality of holographic optical elements 44, 45.

In each of the plurality of holographic optical elements 44, 45, a difference between the maximum phase of the initial phase distribution and the minimum phase of the initial phase distribution with respect to light 50 is, for example, less than 2π. Therefore, zeroth-order diffracted light 53 and zeroth-order diffracted light 55 are generated from light 50 at the plurality of holographic optical elements 44, 45.

As a region to which light 50 is applied is wider in each of the plurality of holographic optical elements 44, 45, light 50 is affected by a larger number of pixels 44p, 45p of the plurality of holographic optical elements 44, 45. Therefore, as the region to which light 50 is applied is wider in each of the plurality of holographic optical elements 44, 45, each of the plurality of holographic optical elements 44, 45 can exhibit the designed performance more excellently.

Therefore, initial phase distribution setting unit 32 sets the initial phase distribution to each of the plurality of holographic optical elements 44, 45 so as to apply light 50 to a wide region of each of the plurality of holographic optical elements 44, 45. For example, in each of the plurality of holographic optical elements 44, 45, the initial phase distribution of each of the plurality of holographic optical elements 44, 45 is set to apply light 50 to 80% or more of the size of each of the plurality of holographic optical elements 44, 45. More preferably, in each of the plurality of holographic optical elements 44, 45, the initial phase distribution of each of the plurality of holographic optical elements 44, 45 is set to apply light 50 to the entire size of each of the plurality of holographic optical elements 44, 45.

Referring to Fig. 2, phase distribution machine learning unit 33 performs machine learning for holographic optical system model 21 in which the initial phase distribution has been set. Phase distribution machine learning unit 33 optimizes the phase distribution of each of the plurality of holographic optical elements 44, 45 with respect to light 50 by the machine learning so as to implement the functions (for example, image transmission, character recognition, data sorting, improvement in SN ratio of an image, and the like) of the holographic optical system more accurately. Phase distribution machine learning unit 33 outputs holographic optical system model 21 including the optimized phase distribution.

When light 50 travels via each of the plurality of holographic optical elements 44, 45, the wavefront of light 50 is changed by the optimized phase distribution of each of the plurality of holographic optical elements 44, 45. Light 50 is diffracted at each of the plurality of holographic optical elements 44, 45. Light 50 travels via each of the plurality of holographic optical elements 44, 45 as non-zeroth-order diffracted light (for example, first-order diffracted light or the like) at each of the plurality of holographic optical elements 44, 45.

In each of the plurality of holographic optical elements 44, 45, a difference between the maximum phase of the optimized phase distribution and the minimum phase of the optimized phase distribution with respect to light 50 is, for example, less than 2π. Therefore, zeroth-order diffracted light 53 and zeroth-order diffracted light 55 are generated from light 50 at the plurality of holographic optical elements 44, 45.

### <Method of Designing Holographic Optical System>

A method of designing the holographic optical system using holographic optical system model 21 according to the present embodiment will be described with reference to Figs. 3 to 11. The method of designing the holographic optical system according to the present embodiment is performed on the computer (holographic optical system designing device 1) by executing holographic optical system designing program 60 (see Fig. 1) by processor 12.

Referring to Fig. 3, the method of designing the holographic optical system according to the present embodiment includes: a step (step S1) of receiving optical condition 20; a step (step S2) of generating holographic optical system model 21; a step (step S3) of setting the initial phase distribution to each of the plurality of holographic optical elements 44, 45 of holographic optical system model 21; and a step (step S4) of performing machine learning for holographic optical system model 21 in which the initial phase distribution has been set.

The step (step S1) of receiving optical condition 20 is performed by optical condition reception unit 30 (see Fig. 2). The operator inputs optical condition 20 into holographic optical system designing device 1 using input device 11 (see Fig. 1). In step S1, optical condition reception unit 30 receives optical condition 20. Optical condition reception unit 30 outputs optical condition 20 to storage 19. Optical condition 20 is stored into storage 19. Optical condition 20 may be stored into storage 19 from outside of holographic optical system designing device 1 via network controller 16. Optical condition 20 may be stored into storage medium 18 (see Fig. 1).

Referring to Figs. 3 and 4, the step (step S2) of generating holographic optical system model 21 is performed by holographic optical system model generation unit 31 (see Fig. 2). In step S2, holographic optical system model generation unit 31 reads out optical condition 20 from storage 19 or the like. Holographic optical system model generation unit 31 generates holographic optical system model 21 on the computer (holographic optical system designing device 1) in accordance with the number of the plurality of holographic optical elements 44, 45, the size of each of the plurality of holographic optical elements 44, 45, and the arrangements of input plane 41, the plurality of holographic optical elements 44, 45 and output plane 42 in optical condition 20. Holographic optical system model 21 includes input plane 41, the plurality of holographic optical elements 44, 45, and output plane 42.

As shown in Fig. 4, the plurality of holographic optical elements 44, 45 are arranged to be off-axis from each other. By light 50 traveling from input plane 41 toward output plane 42 via the plurality of holographic optical elements 44, 45, zeroth-order diffracted light 53 and zeroth-order diffracted light 55 are generated at the plurality of holographic optical elements 44, 45. Input plane 41, the plurality of holographic optical elements 44, 45, and output plane 42 are arranged to avoid each of zeroth-order diffracted light 53 and zeroth-order diffracted light 55 from being overlapped with output plane 42.

Zeroth-order diffracted light 53 is generated by light 50 being incident on holographic optical element 44. Zeroth-order diffracted light 53 travels in an optical path obtained by further extending, from holographic optical element 44, an optical path 52 extending from input plane 41 to holographic optical element 44. Zeroth-order diffracted light 55 is generated by light 50 being incident on holographic optical element 45. Zeroth-order diffracted light 55 travels in an optical path obtained by further extending, from holographic optical element 45, an optical path 54 extending from holographic optical element 44 to holographic optical element 45.

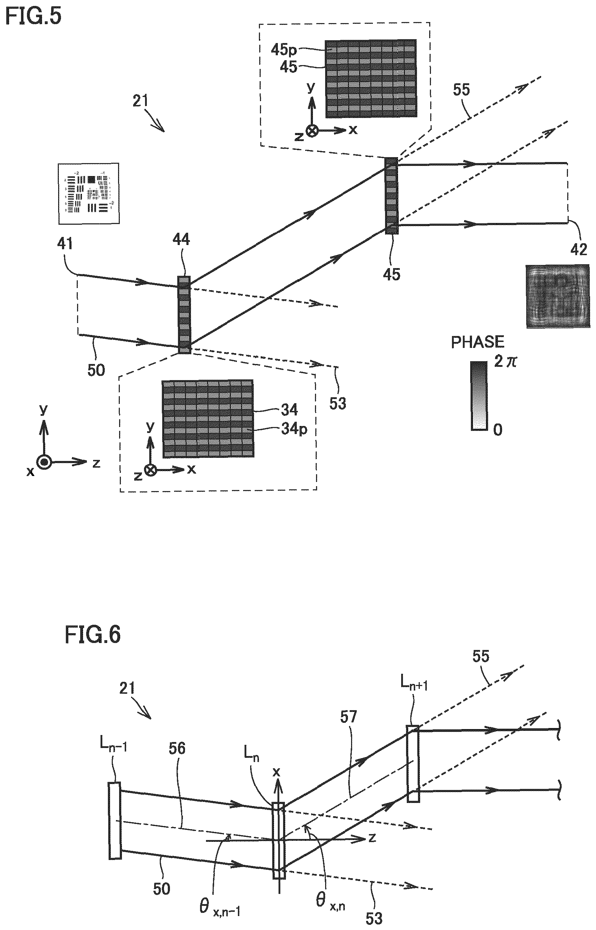

Referring to Figs. 3 and 5, the step (step S3) of setting the initial phase distribution to each of the plurality of holographic optical elements 44, 45 of holographic optical system model 21 is performed by initial phase distribution setting unit 32 (see Fig. 2). In step S3, the operator inputs the initial phase distribution of each of the plurality of holographic optical elements 44, 45 into holographic optical system designing device 1 (see Fig. 1) using input device 11 (see Fig. 1). Initial phase distribution setting unit 32 receives the initial phase distribution input by the operator. Initial phase distribution setting unit 32 inputs the initial phase distribution to each of the plurality of holographic optical elements 44, 45 of holographic optical system model 21 generated by holographic optical system model generation unit 31. In this way, holographic optical system model 21 in which the initial phase distribution has been set is generated.

Initial phase distribution setting unit 32 sets the initial phase distribution to each of the plurality of holographic optical elements 44, 45 so as to allow light 50 to travel from input plane 41 via the plurality of holographic optical elements 44, 45 and exit to output plane 42. When light 50 travels via each of the plurality of holographic optical elements 44, 45, the wavefront of light 50 is changed by the initial phase distribution of each of the plurality of holographic optical elements 44, 45. Light 50 is diffracted at each of the plurality of holographic optical elements 44, 45. Light 50 travels via each of the plurality of holographic optical elements 44, 45 as non-zeroth-order diffracted light (for example, first-order diffracted light or the like) at each of the plurality of holographic optical elements 44, 45.

In each of the plurality of holographic optical elements 44, 45, a difference between the maximum phase of the initial phase distribution and the minimum phase of the initial phase distribution with respect to light 50 is, for example, less than 2π. Therefore, zeroth-order diffracted light 53 and zeroth-order diffracted light 55 are generated from light 50 at the plurality of holographic optical elements 44, 45.

As a region to which light 50 is applied is wider in each of the plurality of holographic optical elements 44, 45, light 50 is affected by a larger number of pixels 44p, 45p of the plurality of holographic optical elements 44, 45. Therefore, as the region to which light 50 is applied is wider in each of the plurality of holographic optical elements 44, 45, each of the plurality of holographic optical elements 44, 45 can exhibit the designed performance more excellently.

Therefore, in step S3, initial phase distribution setting unit 32 (see Fig. 2) sets the initial phase distribution to each of the plurality of holographic optical elements 44, 45 so as to apply light 50 to a wide region of each of the plurality of holographic optical elements 44, 45. For example, in each of the plurality of holographic optical elements 44, 45, the initial phase distribution of each of the plurality of holographic optical elements 44, 45 is set to apply light 50 to 80% or more of the size of each of the plurality of holographic optical elements 44, 45. More preferably, in each of the plurality of holographic optical elements 44, 45, the initial phase distribution of each of the plurality of holographic optical elements 44, 45 is set to apply light 50 to the entire size of each of the plurality of holographic optical elements 44, 45.

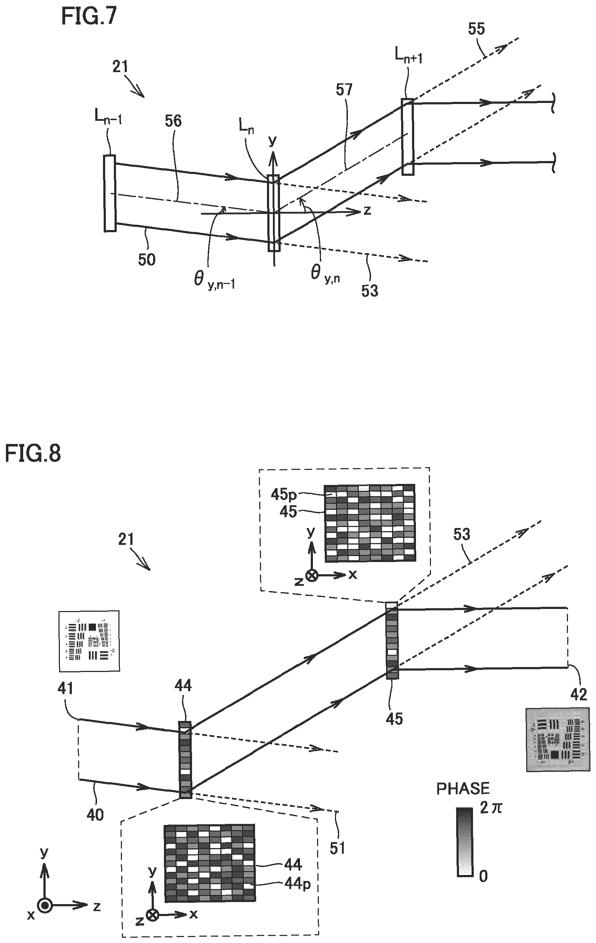

Specifically, when the plurality of holographic optical elements are the same in size as shown in Figs. 6 and 7, an initial phase distribution Φₙ(x, y) of an n-th holographic optical element Lₙ is given by the following formula (1). Φᵢₙ represents a constant of 2π or less. K represents a wavenumber of light 50. The x axis and the y axis define a principal plane of n-th holographic optical element Lₙ and are orthogonal to each other. The z axis is an axis orthogonal to the x axis and the y axis.
[Math. 1] ${Φ}_{n} \left(x, y\right) = {Φ}_{in} + {kxsinθ}_{x} + {kysinθ}_{y}$

θₓ is given by a formula (2). θ_{x,n} represents an angle between the z axis and an optical axis 57 connecting the center of n-th holographic optical element Lₙ and the center of an n+1-th holographic optical element Lₙ₊₁ when viewed in a direction perpendicular to the xz plane. θ_{x,n-1} represents an angle between the z axis and an optical axis 56 connecting the center of an n-1-th holographic optical element Lₙ₋₁ and the center of n-th holographic optical element Lₙ when viewed in the direction perpendicular to the xz plane. In each of θ_{x,n} and θ_{x,n-1}, an angle clockwise with respect to the z axis is a positive angle, and an angle counterclockwise with respect to the z axis is a negative angle. For example, in Fig. 6, θ_{x,n} is a positive angle and θ_{x,n-1} is a negative angle.${θ}_{x} = {θ}_{x , n} - {θ}_{x , n - 1}$

θ_{y} is given by a formula (3). θ_{y,n} represents an angle between the z axis and optical axis 57 connecting the center of n-th holographic optical element Lₙ and the center of n+1-th holographic optical element Lₙ₊₁ when viewed in a direction perpendicular to the yz plane. θ_{y,n-1} represents an angle between the z axis and optical axis 56 connecting the center of n-1-th holographic optical element Lₙ₋₁ and the center of n-th holographic optical element Lₙ when viewed in the direction perpendicular to the yz plane. In each of θ_{y,n} and θ_{y,n-1}, an angle clockwise with respect to the z axis is a positive angle, and an angle counterclockwise with respect to the z axis is a negative angle. For example, in Fig. 7, θ_{y,n} is a positive angle and θ_{y,n-1} is a negative angle.${θ}_{y} = {θ}_{y , n} - {θ}_{y , n - 1}$

When viewed along the optical path of holographic optical system model 21 (optical path of light 50), n-th holographic optical element Lₙ means the n-th holographic optical element counted from input plane 41. When n=1, n-1-th holographic optical element Lₙ₋₁ is regarded as input plane 41. When n-th holographic optical element Lₙ is the last holographic optical element, n+1-th holographic optical element Lₙ₊₁ is regarded as output plane 42. The last holographic optical element means a holographic optical element closest to output plane 42 when viewed along the optical path of holographic optical system model 21 (optical path of light 50). For example, in each of Figs. 4 to 8, holographic optical element 44 is the first holographic optical element, and holographic optical element 45 is the second holographic optical element and is the last holographic optical element.

Referring to Figs. 3 and 8 to 11, the step (step S4) of performing the machine learning for holographic optical system model 21 in which the initial phase distribution has been set is performed by phase distribution machine learning unit 33. In step S4, phase distribution machine learning unit 33 optimizes the phase distribution of each of the plurality of holographic optical elements 44, 45 with respect to light 50 so as to implement the functions (for example, image transmission, character recognition, data sorting, improvement in SN ratio of an image, and the like) of the holographic optical system more accurately. Phase distribution machine learning unit 33 outputs holographic optical system model 21 including the optimized phase distribution.

When light 50 travels via each of the plurality of holographic optical elements 44, 45, the wavefront of light 50 is changed by the optimized phase distribution of each of the plurality of holographic optical elements 44, 45. Light 50 is diffracted at each of the plurality of holographic optical elements 44, 45. Light 50 travels via each of the plurality of holographic optical elements 44, 45 as non-zeroth-order diffracted light (for example, first-order diffracted light or the like) at each of the plurality of holographic optical elements 44, 45.

In each of the plurality of holographic optical elements 44, 45, a difference between the maximum phase of the optimized phase distribution and the minimum phase of the optimized phase distribution with respect to light 50 is, for example, less than 2π. Therefore, zeroth-order diffracted light 53 and zeroth-order diffracted light 55 are generated from light 50 at the plurality of holographic optical elements 44, 45.

The machine learning for holographic optical system model 21 is performed using, for example, an optical diffractive deep neural network (D²NN) and a diffraction calculation for light wave such as a shifted angular spectrum method and a shifted Fresnel diffraction method.

The optical diffractive deep neural network (D²NN) expresses, by using weighed multiplication and bias addition in a deep neural network, diffraction of light 50 at each of input plane 41, the plurality of holographic optical elements 44, 45, and output plane 42, propagation of light 50 between input plane 41 and the holographic optical element (in Figs. 4 to 6, holographic optical element 44) closest to input plane 41 among the plurality of holographic optical elements 44, 45, propagation of light 50 between the plurality of holographic optical elements 44, 45, and propagation of light 50 between output plane 42 and the holographic optical element (in Figs. 4 to 6, holographic optical element 45) closest to output plane 42 among the plurality of holographic optical elements 44, 45. The optical diffractive deep neural network (D²NN) is disclosed in NPL 1, for example.

The diffraction calculation for light wave as performed in the present embodiment is diffraction calculation for light wave between the optical layers (for example, input plane 41, the plurality of holographic optical elements 44, 45, and output plane 42) arranged to be off-axis from each other. The shifted angular spectrum method is disclosed in, for example, K. Matsushima, "Shifted angular spectrum method for off-axis numerical propagation", Optics Express, 2010, Vol. 18 No. 17, pp.18453-18463. The shifted Fresnel diffraction method is disclosed, for example, in Richard P. Muffoletto, John M. Tyler, and Joel E. Tohline, "Shifted Fresnel diffraction for computational holography", Optics Express, 2007, Vol. 15 No. 9, pp.5631-5640.

A content of processing in phase distribution machine learning unit 33 will be described with reference to Fig. 9.

Phase distribution machine learning unit 33 includes a phase distribution optimization module 61. Phase distribution optimization module 61 generates holographic optical system model 21 including the optimized phase distribution by optimizing the phase distribution of each of the plurality of holographic optical elements 44, 45 of holographic optical system model 21 in which the initial phase has been set.

Phase distribution optimization module 61 optimizes the phase distribution of each of the plurality of holographic optical elements 44, 45 using training data set 24. Specifically, phase distribution optimization module 61 selects one piece of training data 24a from a plurality of pieces of training data 24a included in training data set 24. Phase distribution optimization module 61 inputs input training data 24b included in the selected training data 24a, into input plane 41 of holographic optical system model 21. A complex amplitude distribution is output to output plane 42 of holographic optical system model 21. Phase distribution optimization module 61 calculates an error between the complex amplitude distribution and output training data 24c.

Phase distribution optimization module 61 updates (optimizes) the phase distribution of each of the plurality of holographic optical elements 44, 45 so as to reduce the error. Any optimization algorithm can be used when phase distribution optimization module 61 updates (optimizes) the phase distribution of each of the plurality of holographic optical elements 44, 45. As the optimization algorithm, for example, a gradient method can be used, such as SGD (Stochastic Gradient Descent), Momentum SGD, AdaGrad, RMSprop, AdaDelta or Adam (Adaptive moment estimation).

Similarly, phase distribution optimization module 61 repeatedly optimizes the phase distribution of each of the plurality of holographic optical elements 44, 45 of holographic optical system model 21 based on each training data 24a included in training data set 24. Thus, phase distribution optimization module 61 generates holographic optical system model 21 including the optimized phase distribution.

Phase distribution machine learning unit 33 outputs holographic optical system model 21 including the optimized phase distribution, to, for example, storage 19 (see Fig. 1). Holographic optical system model 21 including the optimized phase distribution is stored into storage 19. Holographic optical system model 21 including the optimized phase distribution may be output to storage medium 18 (see Fig. 1).

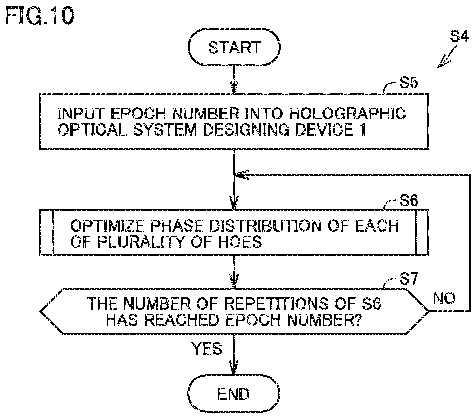

An example of the step (step S4) of performing the machine learning for holographic optical system model 21 in which the initial phase distribution has been set will be described with reference to Fig. 10.

Referring to Fig. 10, in a step S5, the operator inputs an epoch number into holographic optical system designing device 1 using input device 11 (see Fig. 1). The epoch number is the number of repetitions of the machine learning, and is stored into storage 19.

In a step S6, the phase distribution of each of the plurality of holographic optical elements 44, 45 is optimized. In a step S7, phase distribution machine learning unit 33 reads out the epoch number stored in storage 19. Phase distribution machine learning unit 33 determines whether or not the number of repetitions of step S6 has reached the epoch number. When the number of repetitions of step S6 has not reached the epoch number, step S6 is repeatedly performed until the number of repetitions of step S6 reaches the epoch number.

When the number of repetitions of step S6 has reached the epoch number, phase distribution machine learning unit 33 ends the machine learning for holographic optical system model 21. Phase distribution machine learning unit 33 generates holographic optical system model 21 including the optimized phase distribution. Phase distribution machine learning unit 33 outputs holographic optical system model 21 including the optimized phase distribution to, for example, storage 19 (see Fig. 1). Holographic optical system model 21 including the optimized phase distribution is stored into storage 19. Holographic optical system model 21 including the optimized phase distribution may be output to storage medium 18 (see Fig. 1).

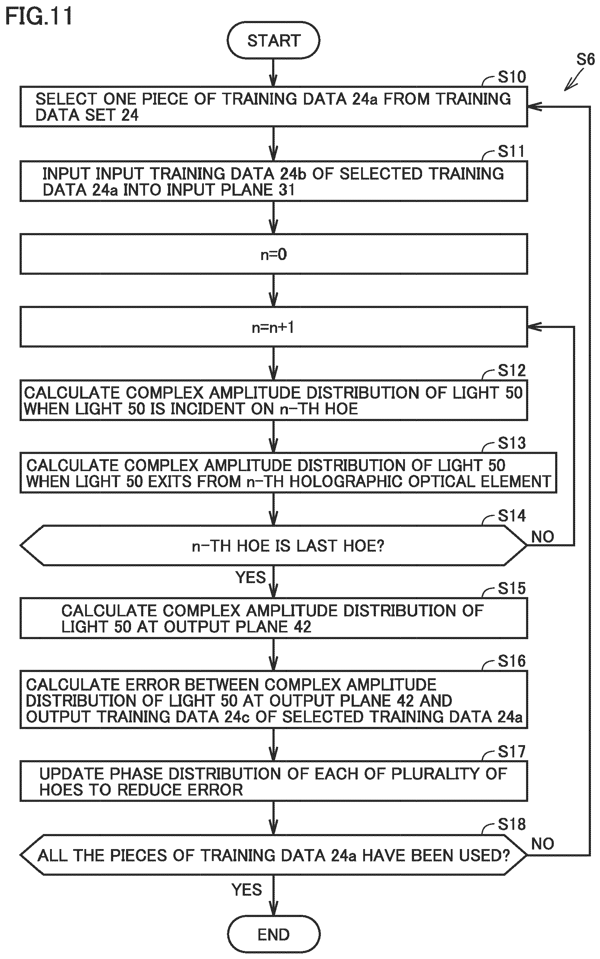

An example of the step (step S6) of optimizing the phase distribution of each of the plurality of holographic optical elements 44, 45 will be described with reference to Fig. 11.

In a step S10, one piece of training data 24a is selected from training data set 24 stored in storage 19. More specifically, one piece of training data 24a having not been through below-described steps S12 to S17 is selected from training data set 24. As shown in Fig. 9, each of the pieces of training data 24a includes input training data 24b and output training data 24c corresponding to input training data 24b. In a step S11, input training data 24b of training data 24a selected in step S10 is converted into a complex amplitude distribution at input plane 41 and is input into input plane 41.

In a step S12, a complex amplitude distribution of light 50 when light 50 is incident on the n-th holographic optical element is calculated, by the diffraction calculation for light wave such as the shifted angular spectrum method and the shifted Fresnel diffraction method, in accordance with a complex amplitude distribution of light 50 when light 50 exits from the n-1-th holographic optical element and the arrangement of the n-th holographic optical element with respect to the n-1-th holographic optical element. When n=1, the n-1-th holographic optical element is regarded as input plane 41, and the arrangement of the first holographic optical element with respect to input plane 41 in optical condition 20 received in step S1 is used.

When the shifted angular spectrum method is used as the diffraction calculation for light wave, a complex amplitude distribution G(x-x₀, y-y₀, z₀) of light 50 when light 50 is incident on the n-th holographic optical element is calculated by the following formula (4) in accordance with a complex amplitude distribution g(x, y, 0) of light 50 when light 50 exits from the n-1-th holographic optical element. H(u, v, x₀, y₀, z₀) in the formula (4) is given by a formula (5). (x₀, y₀, z₀) represents the coordinates of the n-1-th holographic optical element. λ represents the wavelength of light 50 received in step S1. (x, y) represents the coordinates of the n-th holographic optical element. (u, v) represents a Fourier frequency corresponding to (x, y). FT represents a Fourier transform. FT⁻¹ represents an inverse Fourier transform.
[Math. 2] $G \left(x-{x}_{0},y-{y}_{0},{z}_{0}\right) = {FT}^{- 1} \left[FT\left[g\left(x, y, 0\right)\right]H\left(u, v, {x}_{0}, {y}_{0}, {z}_{0}\right)\right]$
[Math. 3] $\begin{matrix}H \left(u, v, {x}_{0}, {y}_{0}, {z}_{0}\right) \\ = \left\{\begin{matrix}exp \left[i2π\left\{{x}_{0}u+{y}_{0}v+{z}_{0}{\left({λ}^{- 2}-{u}^{2}-{v}^{2}\right)}^{- \frac{1}{2}}\right\}\right] , & {u}^{2} + {v}^{2} \leq {λ}^{- 2} \\ 1 , & otherwise\end{matrix}\right.\end{matrix}$

In a step S13, a complex amplitude distribution of light 50 when light 50 exits from the n-th holographic optical element is calculated. As shown in the following formula (6), a complex amplitude distribution G'(x, y) of light 50 when light 50 exits from the n-th holographic optical element is given as the product of complex amplitude distribution G(x, y) of light 50 when light 50 is incident on the n-th holographic optical element and phase distribution Φₙ(x, y) of the n-th holographic optical element. In the formula (6), the coordinate of the n-th holographic optical element in the z axis direction is 0.
[Math. 4] $G ′ \left(x, y\right) = G \left(x, y\right) \times {e}^{{jϕ}_{n} \left(x, y\right)}$

In a step S14, it is determined whether or not the n-th holographic optical element is the last holographic optical element. The last holographic optical element means the holographic optical element closest to output plane 42 when viewed along the optical path of holographic optical system model 21 (optical path of light 50). For example, in the holographic optical system shown in Figs. 4 to 8, holographic optical element 45 is the last holographic optical element.

When the n-th holographic optical element is not the last holographic optical element, each of steps S12 and S13 is performed for the n+1-th holographic optical element. In step S12, the arrangement of the n+1-th holographic optical element with respect to the n-th holographic optical element in optical condition 20 received in step S1 is used.

When the n-th holographic optical element is the last holographic optical element, the process proceeds to a step S15. In step S15, the complex amplitude distribution of light 50 at output plane 42 is calculated, by the diffraction calculation for light wave such as the shifted angular spectrum method and the shifted Fresnel diffraction method, in accordance with the complex amplitude distribution of light 50 when light 50 exits from the last holographic optical element and the arrangement of output plane 42 with respect to the last holographic optical element. In step S15, the arrangement of output plane 42 with respect to the last holographic optical element in optical condition 20 received in step S1 is used.

In a step S16, an error between the complex amplitude distribution of light 50 at output plane 42 as calculated in step S15 and output training data 24c of training data 24a selected in step S10 is calculated. For example, output training data 24c of training data 24a selected in step S10 is converted into a complex amplitude distribution at output plane 42. An error between the complex amplitude distribution of light 50 at output plane 42 as calculated in step S15 and the complex amplitude distribution at output plane 42 from output training data 24c of training data 24a selected in step S10 is calculated.

In a step S17, the phase distribution of each of the plurality of holographic optical elements 44, 45 is updated (optimized) so as to reduce the error calculated in step S16. For example, as an optimization algorithm for the phase distribution of each of the plurality of holographic optical elements 44, 45, a gradient method can be used, such as SGD (Stochastic Gradient Descent), Momentum SGD, AdaGrad, RMSprop, AdaDelta, or Adam (Adaptive moment estimation).

In a step S18, it is determined whether or not all the pieces of training data 24a have been used to update (optimize) the phase distributions of the plurality of holographic optical elements 44, 45. When not all the pieces of training data 24a have been used, the process returns to step S10 so as to newly select one of unused pieces of training data 24a, and steps S11 to S17 are performed with regard to training data 24a newly selected. When all the pieces of training data 24a are used to update (optimize) the phase distributions of the plurality of holographic optical elements 44, 45, the step (step S6) of optimizing the phase distribution of each of the plurality of holographic optical elements 44, 45 of holographic optical system model 21 is ended.

### (Modifications)

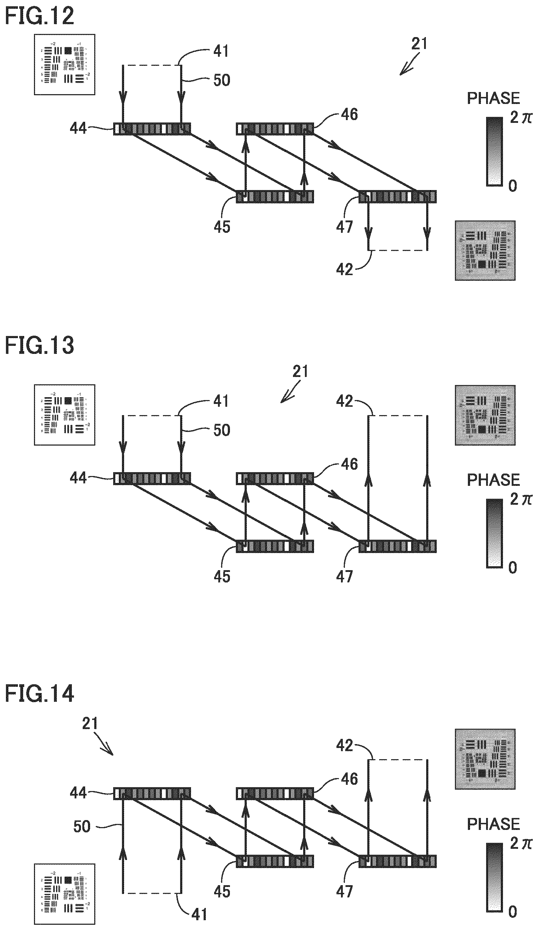

As shown in Figs. 12 to 14, the number of a plurality of holographic optical elements 44, 45, 46, 47 is not limited to two, and may be three or more. The plurality of holographic optical elements 44, 45, 46, 47 may include a plurality of reflection type holographic optical elements that forms a folded optical path.

For example, in a first modification of the present embodiment as shown in Fig. 12, the plurality of holographic optical elements 44, 45, 46, 47 include: holographic optical elements 44, 47 that are each a transmission type holographic optical element; and holographic optical elements 45, 46 that are each a reflection type holographic optical element. In a second modification of the present embodiment as shown in Fig. 13, the plurality of holographic optical elements 44, 45, 46, 47 include: a holographic optical element 44 that is a transmission type holographic optical element; and holographic optical elements 45, 46, 47 that are each a reflection type holographic optical element. In a third modification of the present embodiment as shown in Fig. 14, each of all of the plurality of holographic optical elements 44, 45, 46, 47 is a reflection type holographic optical element.

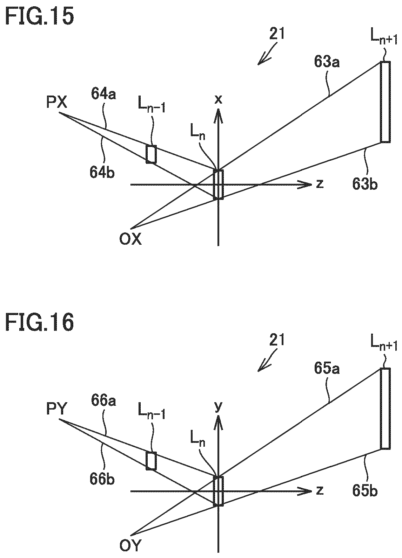

As shown in Figs. 15 and 16, in a fourth modification of the present embodiment, the plurality of holographic optical elements may be different from each other in size. For example, as shown in Figs. 15 and 16, when the sizes of the holographic optical elements are larger in the direction from input plane 41 toward output plane 42, initial phase distribution Φₙ(x, y) of n-th holographic optical element Lₙ is given by, for example, the following formula (7) so as to apply light 50 to a wide region of each of the plurality of holographic optical elements. In the formula (7), the coordinate of n-th holographic optical element Lₙ in the z axis direction is 0.
[Math. 5] ${Φ}_{n} \left(x, y\right) = {Ψ}_{n} \left(x, y\right) - {Ψ}_{n - 1} \left(x, y\right)$

Ψₙ(x, y) represents a phase distribution of light 50 when light 50 exits from n-th holographic optical element Lₙ, and this light 50 is applied to a wide region of n+1-th holographic optical element Lₙ₊₁. Ψₙ₋₁(x, y) represents a phase distribution of light 50 when light 50 is incident on n-th holographic optical element Lₙ, and this light 50 is applied to a wide area of n-th holographic optical element Lₙ. As shown in the following formula (8), Ψₙ(x, y) is decomposed into a component Ψ_{x,n}(x, y) in the x axis direction and a component Ψ_{y,n}(x, y) in the y axis direction. As shown in the following formula (9), Ψₙ₋₁(x, y) is decomposed into a component Ψ_{x,n-1}(x, y) in the x axis direction and a component Ψ_{y,n-1}(x, y) in the y axis direction.
[Math. 6] ${Ψ}_{n} \left(x, y\right) = {Ψ}_{x , n} \left(x, y\right) + {Ψ}_{y , n} \left(x, y\right)$
[Math. 7] ${Ψ}_{n - 1} \left(x, y\right) = {Ψ}_{x , n - 1} \left(x, y\right) + {Ψ}_{y , n - 1} \left(x, y\right)$

As shown in Fig. 15, a point OX is defined as an intersection between straight lines 63a, 63b connecting opening ends of n-th holographic optical element Lₙ in the x axis direction and opening ends of n+1-th holographic optical element Lₙ₊₁ in the x axis direction, and the coordinates of point OX are defined as (x_{OX}, 0, z_{OX}). A point PX is defined as an intersection between straight lines 64a, 64b connecting the opening ends of n-th holographic optical element Lₙ in the x axis direction and opening ends of n-1-th holographic optical element Lₙ₋₁ in the x axis direction, and the coordinates of point PX are defined as (x_{PX}, 0, z_{PX}). As shown in Fig. 16, a point OY is defined as an intersection between straight lines 65a, 65b connecting opening ends of n-th holographic optical element Lₙ in the y axis direction and opening ends of n+1-th holographic optical element Lₙ₊₁ in the y axis direction, and the coordinates of point OY are defined as (0, y_{OY}, z_{OY}). A point PY is defined as an intersection between straight lines 66a, 66b connecting the opening ends of n-th holographic optical element Lₙ in the y axis direction and opening ends of n-1-th holographic optical element Lₙ₋₁ in the y axis direction, and the coordinates of point PY are defined as (0, y_{PY}, z_{PY}).

Ψ_{x,n}(x, y) and Ψ_{y,n}(x, y) in the formula (8) as well as Ψ_{x,n-1}(x, y) and Ψ_{y,n-1}(x, y) in the formula (9) are given by the following formulas (10) to (13). Each of Φ_{x,n,in}, Φ_{y,n,in}, Φ_{x,n-1,in}, and Φ_{y,n-1,in} represents a constant of 2π or less.
[Math. 8] ${Ψ}_{x , n} \left(x, y\right) = {Φ}_{x , n , in} - k {\left(x-{x}_{OX}\right)}^{2} / \left(-2{z}_{OX}\right)$
[Math. 9] ${Ψ}_{y , n} \left(x, y\right) = {Φ}_{y , n , in} - k {\left(y-{y}_{OY}\right)}^{2} / \left(-2{z}_{OY}\right)$
[Math. 10] ${Ψ}_{x , n - 1} \left(x, y\right) = {Φ}_{x , n - 1 , in} - k {\left(x-{x}_{PX}\right)}^{2} / \left(-2{z}_{PX}\right)$
[Math. 11] ${Ψ}_{y , n - 1} \left(x, y\right) = {Φ}_{y , n - 1 , in} - k {\left(y-{y}_{PY}\right)}^{2} / \left(-2{z}_{PY}\right)$

### <Holographic Optical System Designing Program 60>

Holographic optical system designing program 60 (see Fig. 1) causes processor 12 (see Fig. 1) to perform the method of designing the holographic optical system according to the present embodiment. A computer-readable recording medium (non-transitory computer-readable recording medium such as storage medium 18) of the present embodiment may store a program such as holographic optical system designing program 60.

Effects of the method of designing the holographic optical system and holographic optical system designing program 60 according to the present embodiment will be described.

In the method of designing the holographic optical system using holographic optical system model 21 according to the present embodiment, holographic optical system model 21 includes input plane 41, the plurality of holographic optical elements 44, 45 arranged optically in series, and output plane 42. The method of designing the holographic optical system according to the present embodiment includes: the step (step S1) of receiving optical condition 20 including the number of the plurality of holographic optical elements 44, 45, the size of each of the plurality of holographic optical elements 44, 45, the arrangements of input plane 41, the plurality of holographic optical elements 44, 45 and output plane 42, and the wavelength of light 50 traveling via each of the plurality of holographic optical elements 44, 45; and the step (step S2) of generating holographic optical system model 21 that satisfies the number of the plurality of holographic optical elements, the size of each of the plurality of holographic optical elements, and the arrangements of the input plane, the plurality of holographic optical elements and the output plane in optical condition 20. Input plane 41, the plurality of holographic optical elements 44, 45, and output plane 42 are arranged to avoid each of zeroth-order diffracted light 53 and zeroth-order diffracted light 55 from being overlapped with output plane 42, each of zeroth-order diffracted light 53 and zeroth-order diffracted light 55 being generated at each of the plurality of holographic optical elements 44, 45 by light 50 traveling from input plane 41 toward output plane 42 via the plurality of holographic optical elements 44, 45. The method of designing the holographic optical system according to the present embodiment includes the step (step S3) of setting the initial phase distribution to each of the plurality of holographic optical elements 44, 45 so as to allow light 50 to travel from input plane 41 via the plurality of holographic optical elements 44, 45 and exit to output plane 42; and the step (step S4) of performing the machine learning for holographic optical system model 21 in which the initial phase distribution has been set, by optimizing the phase distribution of each of the plurality of holographic optical elements 44, 45 with respect to light 50.

In the method of designing the holographic optical system according to the present embodiment, input plane 41, the plurality of holographic optical elements 44, 45, and output plane 42 are arranged so as to avoid each of zeroth-order diffracted light 53 and zeroth-order diffracted light 55 from being overlapped with output plane 42, each of zeroth-order diffracted light 53 and zeroth-order diffracted light 55 being generated at each of the plurality of holographic optical elements 44, 45 by light 50 traveling from input plane 41 toward output plane 42 via the plurality of holographic optical elements 44, 45. Therefore, it is possible to design a holographic optical system in which each of zeroth-order diffracted light 53 and zeroth-order diffracted light 55 is prevented from being overlapped with output plane 42. Moreover, in the method of designing the holographic optical system according to the present embodiment, the initial phase distribution is set to each of the plurality of holographic optical elements 44, 45 so as to allow light 50 to travel from input plane 41 via the plurality of holographic optical elements 44, 45 and exit to output plane 42. Therefore, the functions of the holographic optical system can be implemented more accurately. The optimized phase distributions of the plurality of holographic optical elements 44, 45 to attain the optical path of light 50 from input plane 41 to output plane 42 via the plurality of holographic optical elements 44, 45 can be obtained more securely in a shorter period of time with a smaller amount of computation. The holographic optical system in which each of zeroth-order diffracted light 53 and zeroth-order diffracted light 55 is prevented from being overlapped with output plane 42 can be designed more efficiently.

The method of designing the holographic optical system according to the present embodiment includes the step (step S4) of performing the machine learning for holographic optical system model 21. Therefore, even when the number of the holographic optical elements is increased in order to improve or expand an optical function of the holographic optical system, the amount of computation can be suppressed from being significantly increased. In the design of the holographic optical system, it is possible to handle light 50 as the wavefront and to more accurately reflect the diffraction phenomenon of light 50 in the holographic optical system. The holographic optical system can be simulated more accurately in a shorter period of time.

In the method of designing the holographic optical system according to the present embodiment, the plurality of holographic optical elements 44, 45 include a first holographic optical element (for example, holographic optical element 44) having a first size and a second holographic optical element (for example, holographic optical element 45) having a second size different from the first size. In the step of setting the initial phase distribution to each of the plurality of holographic optical elements 44, 45, the initial phase distribution is set to each of the plurality of holographic optical elements 44, 45 so as to apply light 50 to 80% or more of the first size and 80% or more of the second size.

Therefore, the wavefront of light 50 is affected by a large number of pixels 44p, 45p of the plurality of holographic optical elements 44, 45. Each of the plurality of holographic optical elements 44, 45 can exhibit the designed performance with respect to light 50 more excellently. The holographic optical system having higher performance may be designed more efficiently.

In the method of designing the holographic optical system according to the present embodiment, the plurality of holographic optical elements 44, 45 include the plurality of reflection type holographic optical elements that form the folded optical path. Thus, a compact holographic optical system can be designed more efficiently.

Holographic optical system designing program 60 according to the present embodiment causes processor 12 to perform each step of the method of designing the holographic optical system according to the present embodiment. Therefore, a holographic optical system in which each of zeroth-order diffracted light 53 and zeroth-order diffracted light 55 is prevented from being overlapped with output plane 42 can be efficiently designed.

### (Second Embodiment)

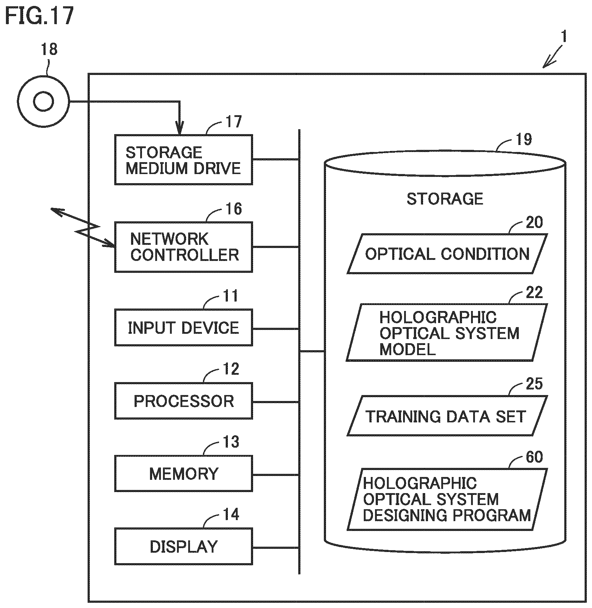

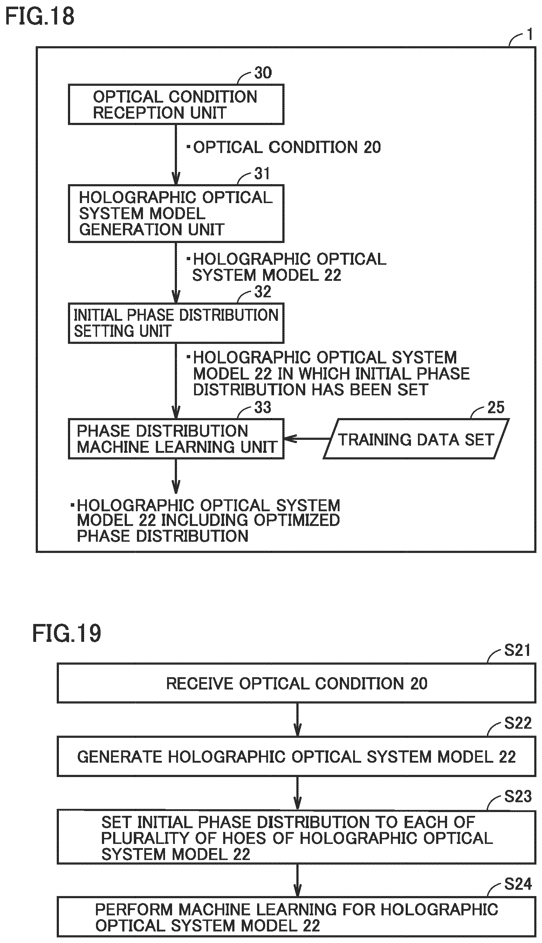

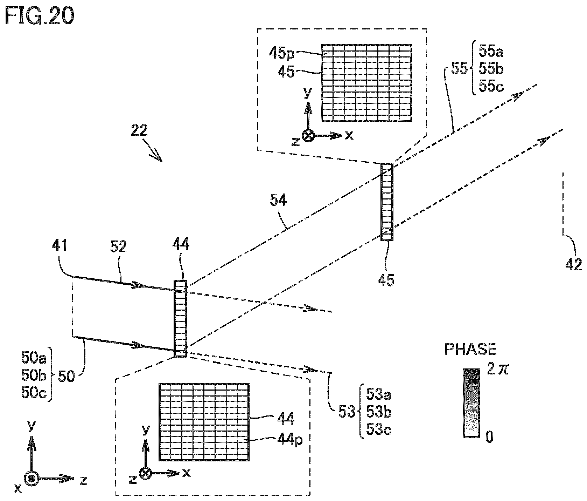

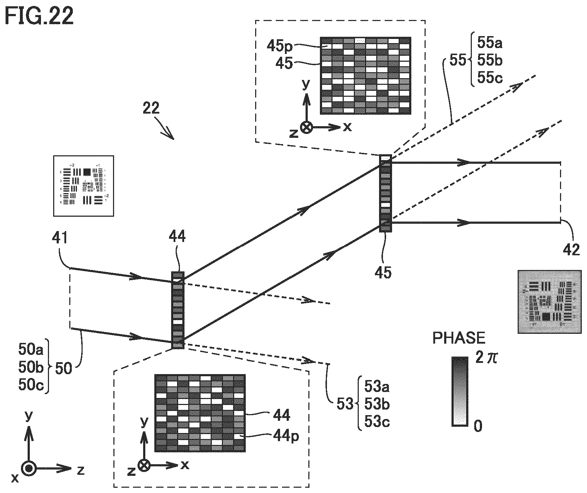

A holographic optical system designing device 1 according to a second embodiment will be described with reference to Figs. 17 and 18. Holographic optical system designing device 1 according to the present embodiment is similar to holographic optical system designing device 1 according to the first embodiment, but is different from holographic optical system designing device 1 according to the first embodiment mainly in the following points due to light 50 including a plurality of wavelength components 50a, 50b, 50c (see Figs. 20 to 22).

### <Hardware Configuration>

As shown in Figs. 20 to 22, in the present embodiment, light 50 includes a plurality of wavelength components 50a, 50b, 50c. The wavelengths of the plurality of wavelength components 50a, 50b, 50c are different from one another. In one example of the present embodiment, light 50 includes three wavelength components 50a, 50b, 50c. Wavelength component 50a is, for example, red light. Wavelength component 50b is, for example, green light. Wavelength component 50c is, for example, blue light.

Referring to Fig. 17, a holographic optical system model 22 of the present embodiment is a holographic optical system model for the plurality of wavelength components 50a, 50b, 50c, by which a phase distribution for each of the plurality of wavelength components 50a, 50b, 50c can be provided to each of the plurality of holographic optical elements 44, 45.

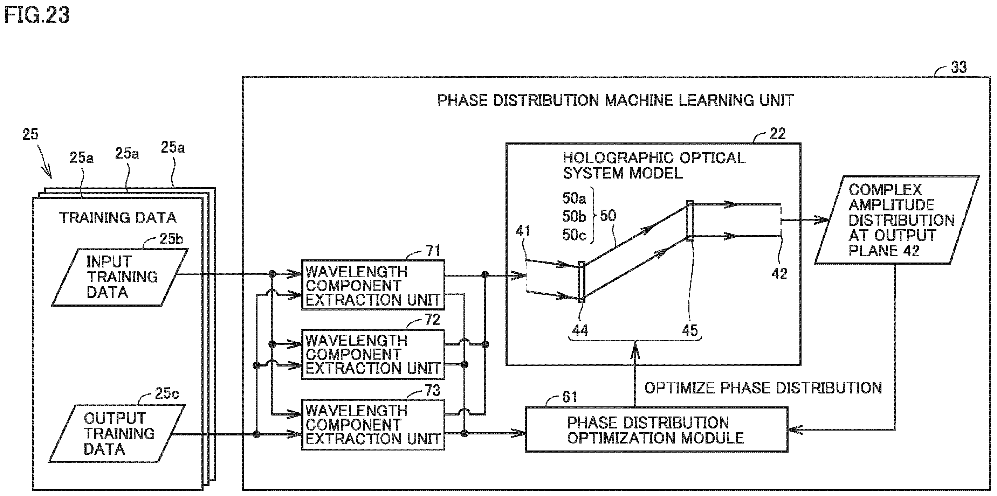

Referring to Fig. 17, in the present embodiment, a training data set 25 is stored in storage 19 instead of training data set 24 (see Fig. 1). Training data set 25 of the present embodiment is a training data set for the plurality of wavelength components 50a, 50b, 50c, and includes a plurality of pieces of training data 25a (see Fig. 23). Each of the plurality of pieces of training data 25a includes input training data 25b (see Fig. 23) and output training data 25c (see Fig. 23) corresponding to input training data 25b. Each of input training data 25b and output training data 25c includes the plurality of wavelength components 50a, 50b, 50c. Each of input training data 25b and output training data 25c is, for example, a color image.

### <Functional Configuration>

Referring to Fig. 18, optical condition reception unit 30 receives optical condition 20 from an operator or the like of holographic optical system designing device 1. In the present embodiment, optical condition reception unit 30 receives the wavelengths of the plurality of wavelength components 50a, 50b, 50c as the wavelength of light 50. The wavelengths of the plurality of wavelength components 50a, 50b, 50c are different from one another.

Referring to Fig. 18, holographic optical system model generation unit 31 generates holographic optical system model 22 in the same manner as in the first embodiment. Holographic optical system model 22 is a holographic optical system model for the plurality of wavelength components 50a, 50b, 50c. As shown in Fig. 20, the plurality of wavelength components 50a, 50b, 50c travel from input plane 41 toward output plane 42 via the plurality of holographic optical elements 44, 45, thereby generating zeroth-order diffracted light 53 and zeroth-order diffracted light 55 at the plurality of holographic optical elements 44, 45. Input plane 41, the plurality of holographic optical elements 44, 45, and output plane 42 are arranged to avoid each of zeroth-order diffracted light 53 and zeroth-order diffracted light 55 from being overlapped with output plane 42.

In the present embodiment, zeroth-order diffracted light 53 includes zeroth-order diffracted light 53a, zeroth-order diffracted light 53b, and zeroth-order diffracted light 53c. Zeroth-order diffracted light 53a is generated at holographic optical element 44 by wavelength component 50a traveling from input plane 41 toward output plane 42 via holographic optical element 44. Zeroth-order diffracted light 53b is generated at holographic optical element 44 by wavelength component 50b traveling from input plane 41 toward output plane 42 via holographic optical element 44. Zeroth-order diffracted light 53c is generated at holographic optical element 44 by wavelength component 50c traveling from input plane 41 toward output plane 42 via holographic optical element 44.

In the present embodiment, zeroth-order diffracted light 55 includes zeroth-order diffracted light 55a, zeroth-order diffracted light 55b, and zeroth-order diffracted light 55c. Zeroth-order diffracted light 55a is generated at holographic optical element 45 by wavelength component 50a traveling from input plane 41 toward output plane 42 via holographic optical element 45. Zeroth-order diffracted light 55b is generated at holographic optical element 45 by wavelength component 50b traveling from input plane 41 toward output plane 42 via holographic optical element 45. Zeroth-order diffracted light 55c is generated at holographic optical element 45 by wavelength component 50c traveling from input plane 41 toward output plane 42 via holographic optical element 45.

Referring to Fig. 18, from holographic optical system model 22 generated by holographic optical system model generation unit 31, initial phase distribution setting unit 32 generates holographic optical system model 22 in which the initial phase distribution has been set. For example, the operator inputs the initial phase distribution of each of the plurality of holographic optical elements 44, 45 into holographic optical system designing device 1 (see Fig. 17) using input device 11 (see Fig. 17). Initial phase distribution setting unit 32 receives the initial phase distribution input by the operator. Initial phase distribution setting unit 32 sets the initial phase distribution to each of the plurality of holographic optical elements 44, 45 of holographic optical system model 22 generated by holographic optical system model generation unit 31. In this way, initial phase distribution setting unit 32 generates holographic optical system model 22 in which the initial phase distribution has been set.

Initial phase distribution setting unit 32 sets the initial phase distribution to each of the plurality of holographic optical elements 44, 45 so as to allow the plurality of wavelength components 50a, 50b, 50c to travel from input plane 41 via the plurality of holographic optical elements 44, 45 and exit to output plane 42. When the plurality of wavelength components 50a, 50b, 50c travel via the plurality of holographic optical elements 44, 45, the wavefront of each of the plurality of wavelength components 50a, 50b, 50c is changed by the initial phase distribution of each of the plurality of holographic optical elements 44, 45 for each of the plurality of wavelength components 50a, 50b, 50c. Each of the plurality of wavelength components 50a, 50b, 50c is diffracted at each of the plurality of holographic optical elements 44, 45.

Specifically, when wavelength component 50a travels via each of the plurality of holographic optical elements 44, 45, the wavefront of wavelength component 50a is changed by the initial phase distribution of each of the plurality of holographic optical elements 44, 45 for wavelength component 50a. Wavelength component 50a is diffracted at each of the plurality of holographic optical elements 44, 45. When wavelength component 50b travels via each of the plurality of holographic optical elements 44, 45, the wavefront of wavelength component 50b is changed by the initial phase distribution of each of the plurality of holographic optical elements 44, 45 for wavelength component 50b. Wavelength component 50b is diffracted at each of the plurality of holographic optical elements 44, 45. When wavelength component 50c travels via each of the plurality of holographic optical elements 44, 45, the wavefront of wavelength component 50c is changed by the initial phase distribution of each of the plurality of holographic optical elements 44, 45 for wavelength component 50c. Wavelength component 50c is diffracted at each of the plurality of holographic optical elements 44, 45.

Each of the plurality of wavelength components 50a, 50b, 50c travels via each of the plurality of holographic optical elements 44, 45 as non-zeroth-order diffracted light (for example, first-order diffracted light or the like) at each of the plurality of holographic optical elements 44, 45. Initial phase distribution setting unit 32 outputs holographic optical system model 22 in which the initial phase distribution has been set.

In each of the plurality of holographic optical elements 44, 45, a difference between the maximum phase of the initial phase distribution and the minimum phase of the initial phase distribution with respect to each of the plurality of wavelength components 50a, 50b, 50c is, for example, less than 2π. Therefore, zeroth-order diffracted light 53 and zeroth-order diffracted light 55 are generated from the plurality of wavelength components 50a, 50b, 50c at the plurality of holographic optical elements 44, 45. Zeroth-order diffracted light 53 includes zeroth-order diffracted light 53a, zeroth-order diffracted light 53b, and zeroth-order diffracted light 53c. Zeroth-order diffracted light 55 includes zeroth-order diffracted light 55a, zeroth-order diffracted light 55b, and zeroth-order diffracted light 55c.

As a region to which each of the plurality of wavelength components 50a, 50b, 50c is applied is wider in each of the plurality of holographic optical elements 44, 45, each of the plurality of wavelength components 50a, 50b, 50c is affected by a larger number of pixels 44p, 45p of the plurality of holographic optical elements 44, 45. Therefore, as the region to which each of the plurality of wavelength components 50a, 50b, 50c is applied is wider in each of the plurality of holographic optical elements 44, 45, each of the plurality of holographic optical elements 44, 45 can exhibit the designed performance more excellently.

Therefore, initial phase distribution setting unit 32 (see Fig. 18) sets the initial phase distribution to each of the plurality of holographic optical elements 44, 45 so as to apply each of the plurality of wavelength components 50a, 50b, 50c to a wide region of each of the plurality of holographic optical elements 44, 45. For example, in each of the plurality of holographic optical elements 44, 45, the initial phase distribution of each of the plurality of holographic optical elements 44, 45 is set to apply each of the plurality of wavelength components 50a, 50b, 50c to 80% or more of the size of each of the plurality of holographic optical elements 44, 45. More preferably, in each of the plurality of holographic optical elements 44, 45, the initial phase distribution of each of the plurality of holographic optical elements 44, 45 is set to apply each of the plurality of wavelength components 50a, 50b, 50c to the entire size of each of the plurality of holographic optical elements 44, 45.

Referring to Fig. 18, phase distribution machine learning unit 33 performs machine learning for holographic optical system model 22 in which the initial phase distribution has been set. Phase distribution machine learning unit 33 optimizes a phase distribution of each of the plurality of holographic optical elements 44, 45 with respect to each of the plurality of wavelength components 50a, 50b, 50c by the machine learning so as to implement the functions of the holographic optical system more accurately. Phase distribution machine learning unit 33 provides the optimized phase distribution for each of the plurality of wavelength components 50a, 50b, 50c to each of the plurality of holographic optical elements 44, 45.

When the plurality of wavelength components 50a, 50b, 50c travel via each of the plurality of holographic optical elements 44, 45, the wavefront of each of the plurality of wavelength components 50a, 50b, 50c is changed by the optimized phase distribution of each of the plurality of holographic optical elements 44, 45 for each of the plurality of wavelength components 50a, 50b, 50c. Each of the plurality of wavelength components 50a, 50b, 50c is diffracted at each of the plurality of holographic optical elements 44, 45.

Specifically, when wavelength component 50a travels via each of the plurality of holographic optical elements 44, 45, the wavefront of wavelength component 50a is changed by the optimized phase distribution of each of the plurality of holographic optical elements 44, 45 for wavelength component 50a. Wavelength component 50a is diffracted at each of the plurality of holographic optical elements 44, 45. When wavelength component 50b travels via each of the plurality of holographic optical elements 44, 45, the wavefront of wavelength component 50b is changed by the optimized phase distribution of each of the plurality of holographic optical elements 44, 45 for wavelength component 50b. Wavelength component 50b is diffracted at each of the plurality of holographic optical elements 44, 45. When wavelength component 50c travels via the plurality of holographic optical elements 44, 45, the wavefront of wavelength component 50c is changed by the optimized phase distribution of each of the plurality of holographic optical elements 44, 45 for wavelength component 50c. Wavelength component 50c is diffracted at each of the plurality of holographic optical elements 44, 45.

Each of the plurality of wavelength components 50a, 50b, 50c travels via each of the plurality of holographic optical elements 44, 45 as non-zeroth-order diffracted light (for example, first-order diffracted light or the like) at each of the plurality of holographic optical elements 44, 45. Phase distribution machine learning unit 33 outputs holographic optical system model 22 including the optimized phase distribution.

In each of the plurality of holographic optical elements 44, 45, a difference between the maximum phase of the optimized phase distribution and the minimum phase of the optimized phase distribution with respect to each of the plurality of wavelength components 50a, 50b, 50c is, for example, less than 2π. Therefore, zeroth-order diffracted light 53 and zeroth-order diffracted light 55 are generated from the plurality of wavelength components 50a, 50b, 50c at the plurality of holographic optical elements 44, 45. Zeroth-order diffracted light 53 includes zeroth-order diffracted light 53a, zeroth-order diffracted light 53b, and zeroth-order diffracted light 53c. Zeroth-order diffracted light 55 includes zeroth-order diffracted light 55a, zeroth-order diffracted light 55b, and zeroth-order diffracted light 55c.

### <Method of Designing Holographic Optical System>

A method of designing a holographic optical system according to the present embodiment will be described with reference to Figs. 19 to 26. The method of designing the holographic optical system according to the present embodiment is similar to the method of designing the holographic optical system according to the first embodiment, but is different from the method of designing the holographic optical system according to the first embodiment mainly in the following points due to light 50 including the plurality of wavelength components 50a, 50b, 50c (see Figs. 20 to 22).

Referring to Fig. 19, the method of designing the holographic optical system according to the present embodiment includes: a step (step S21) of receiving optical condition 20; a step (step S22) of generating holographic optical system model 22; a step (step S23) of setting the initial phase distribution to each of the plurality of holographic optical elements 44, 45 of holographic optical system model 22; and a step (step S24) of performing machine learning for holographic optical system model 22 in which the initial phase distribution has been set.

Referring to Fig. 19, the step (step S21) of receiving optical condition 20 in the present embodiment is performed by optical condition reception unit 30 (see Fig. 18). Step S21 is similar to step S1 (see Fig. 3) in the first embodiment; however, in step S21, optical condition reception unit 30 receives the wavelengths of the plurality of wavelength components 50a, 50b, 50c as the wavelength of light 50. The wavelengths of the plurality of wavelength components 50a, 50b, 50c are different from one another.

Referring to Figs. 19 and 20, the step (step S22) of generating holographic optical system model 22 in the present embodiment is performed by holographic optical system model generation unit 31 (see Fig. 18). Step S22 is similar to step S2 (see Fig. 3) in the first embodiment; however, in step S22, holographic optical system model generation unit 31 generates holographic optical system model 22 on the computer (holographic optical system designing device 1) in accordance with the number of the plurality of holographic optical elements 44, 45, the size of each of the plurality of holographic optical elements 44, 45, and the arrangements of input plane 41, the plurality of holographic optical elements 44, 45 and output plane 42 in optical condition 20. Holographic optical system model 22 is a holographic optical system model for the plurality of wavelength components 50a, 50b, 50c.

The plurality of wavelength components 50a, 50b, 50c travel from input plane 41 toward output plane 42 via the plurality of holographic optical elements 44, 45, thereby generating zeroth-order diffracted light 53 and zeroth-order diffracted light 55 at each of the plurality of holographic optical elements 44, 45. Input plane 41, the plurality of holographic optical elements 44, 45, and output plane 42 are arranged to avoid each of zeroth-order diffracted light 53 and zeroth-order diffracted light 55 from being overlapped with output plane 42. Zeroth-order diffracted light 53 includes zeroth-order diffracted light 53a, zeroth-order diffracted light 53b, and zeroth-order diffracted light 53c. Zeroth-order diffracted light 55 includes zeroth-order diffracted light 55a, zeroth-order diffracted light 55b, and zeroth-order diffracted light 55c.

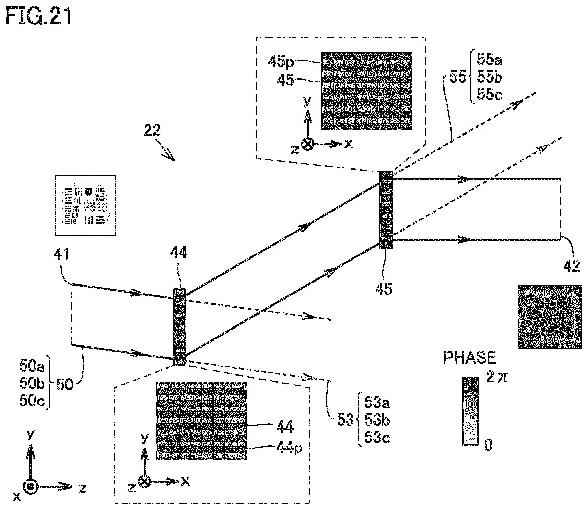

Referring to Figs. 19 and 21, the step (step S23) of setting the initial phase distribution to each of the plurality of holographic optical elements 44, 45 of holographic optical system model 22 in the present embodiment is performed by initial phase distribution setting unit 32 (see Fig. 18). In step S23 of the present embodiment, initial phase distribution setting unit 32 sets the initial phase distribution to each of the plurality of holographic optical elements 44, 45 of holographic optical system model 22 generated by holographic optical system model generation unit 31.

Specifically, initial phase distribution setting unit 32 sets, to holographic optical element 44, each of an initial phase distribution for wavelength component 50a, an initial phase distribution for wavelength component 50b, and an initial phase distribution for wavelength component 50c. Initial phase distribution setting unit 32 sets, to holographic optical element 45, each of an initial phase distribution for wavelength component 50a, an initial phase distribution for wavelength component 50b, and an initial phase distribution for wavelength component 50c. The initial phase distribution for wavelength component 50a as set to holographic optical element 45 may be the same as or different from the initial phase distribution for wavelength component 50a as set to holographic optical element 44. The initial phase distribution for wavelength component 50b as set to holographic optical element 45 may be the same as or different from the initial phase distribution for wavelength component 50b as set to holographic optical element 44. The initial phase distribution for wavelength component 50c as set to holographic optical element 45 may be the same as or different from the initial phase distribution for wavelength component 50c as set to holographic optical element 44.

In this way, initial phase distribution setting unit 32 generates holographic optical system model 22 in which the initial phase distribution has been set.

Initial phase distribution setting unit 32 sets the initial phase distribution to each of the plurality of holographic optical elements 44, 45 so as to allow the plurality of wavelength components 50a, 50b, 50c to travel from input plane 41 via the plurality of holographic optical elements 44, 45 and exit to output plane 42. When the plurality of wavelength components 50a, 50b, 50c travel via each of the plurality of holographic optical elements 44, 45, the wavefront of each of the plurality of wavelength components 50a, 50b, 50c is changed by the initial phase distribution of each of the plurality of holographic optical elements 44, 45. The plurality of wavelength components 50a, 50b, 50c are diffracted at each of the plurality of holographic optical elements 44, 45.

Specifically, the wavefront of wavelength component 50a is changed by the initial phase distribution of holographic optical element 44 for wavelength component 50a and the initial phase distribution of holographic optical element 45 for wavelength component 50a. Wavelength component 50a is diffracted at each of holographic optical elements 44, 45. The wavefront of wavelength component 50b is changed by the initial phase distribution of holographic optical element 44 for wavelength component 50b and the initial phase distribution of holographic optical element 45 for wavelength component 50b. Wavelength component 50b is diffracted at each of holographic optical elements 44, 45. The wavefront of wavelength component 50c is changed by the initial phase distribution of holographic optical element 44 for wavelength component 50c and the initial phase distribution of holographic optical element 45 for wavelength component 50c. Wavelength component 50c is diffracted at each of holographic optical elements 44, 45.

Each of the plurality of wavelength components 50a, 50b, 50c travels via each of the plurality of holographic optical elements 44, 45 as non-zeroth-order diffracted light (for example, first-order diffracted light or the like) at each of the plurality of holographic optical elements 44, 45. Initial phase distribution setting unit 32 outputs holographic optical system model 22 in which the initial phase distribution has been set.

In the initial phase distribution of each of the plurality of holographic optical elements 44, 45, a difference between the maximum phase of the initial phase distribution and the minimum phase of the initial phase distribution with respect to each of the plurality of wavelength components 50a, 50b, 50c is, for example, less than 2π. Therefore, zeroth-order diffracted light 53 and zeroth-order diffracted light 55 are generated from the plurality of wavelength components 50a, 50b, 50c at the plurality of holographic optical elements 44, 45. Zeroth-order diffracted light 53 includes zeroth-order diffracted light 53a, zeroth-order diffracted light 53b, and zeroth-order diffracted light 53c. Zeroth-order diffracted light 55 includes zeroth-order diffracted light 55a, zeroth-order diffracted light 55b, and zeroth-order diffracted light 55c.

As a region to which each of the plurality of wavelength components 50a, 50b, 50c is applied is wider in each of the plurality of holographic optical elements 44, 45, each of the plurality of wavelength components 50a, 50b, 50c is affected by a larger number of pixels 44p, 45p of the plurality of holographic optical elements 44, 45. Therefore, as the region to which each of the plurality of wavelength components 50a, 50b, 50c is applied is wider in each of the plurality of holographic optical elements 44, 45, each of the plurality of holographic optical elements 44, 45 can exhibit the designed performance more excellently.

Therefore, initial phase distribution setting unit 32 (see Fig. 18) sets the initial phase distribution to each of the plurality of holographic optical elements 44, 45 so as to apply each of the plurality of wavelength components 50a, 50b, 50c to a wide region of each of the plurality of holographic optical elements 44, 45. For example, in each of the plurality of holographic optical elements 44, 45, the initial phase distribution of each of the plurality of holographic optical elements 44, 45 is set to apply each of the plurality of wavelength components 50a, 50b, 50c to 80% or more of the size of each of the plurality of holographic optical elements 44, 45. More preferably, in each of the plurality of holographic optical elements 44, 45, the initial phase distribution of each of the plurality of holographic optical elements 44, 45 is set to apply each of the plurality of wavelength components 50a, 50b, 50c to the entire size of each of the plurality of holographic optical elements 44, 45.

Referring to Figs. 19 and 22 to 26, the step (step S24) of performing the machine learning for holographic optical system model 22 in which the initial phase distribution has been set according to the present embodiment is performed by phase distribution machine learning unit 33 (see Fig. 18). In step S24, phase distribution machine learning unit 33 optimizes the phase distribution of each of the plurality of holographic optical elements 44, 45 so as to implement the functions of the holographic optical system more accurately. Phase distribution machine learning unit 33 provides the optimized phase distribution for each of the plurality of wavelength components 50a, 50b, 50c to each of the plurality of holographic optical elements 44, 45.

The phase distribution of each of the plurality of holographic optical elements 44, 45 is optimized to correspond to each of the plurality of wavelength components 50a, 50b, 50c. That is, the optimized phase distribution of holographic optical element 44 includes an optimized phase distribution for wavelength component 50a, an optimized phase distribution for wavelength component 50b, and an optimized phase distribution for wavelength component 50c. The optimized phase distribution of holographic optical element 45 includes an optimized phase distribution for wavelength component 50a, an optimized phase distribution for wavelength component 50b, and an optimized phase distribution for wavelength component 50c.

When the plurality of wavelength components 50a, 50b, 50c travel via each of the plurality of holographic optical elements 44, 45, the wavefront of each of the plurality of wavelength components 50a, 50b, 50c is changed by the optimized phase distribution of each of the plurality of holographic optical elements 44, 45 for each of the plurality of wavelength components 50a, 50b, 50c. Each of the plurality of wavelength components 50a, 50b, 50c is diffracted at each of the plurality of holographic optical elements 44, 45.

Specifically, the wavefront of wavelength component 50a is changed by the optimized phase distribution of holographic optical element 44 for wavelength component 50a and the optimized phase distribution of holographic optical element 45 for wavelength component 50a. Wavelength component 50a is diffracted at each of holographic optical elements 44, 45. The wavefront of wavelength component 50b is changed by the optimized phase distribution of holographic optical element 44 for wavelength component 50b and the optimized phase distribution of holographic optical element 45 for wavelength component 50b. Wavelength component 50b is diffracted at each of holographic optical elements 44, 45. The wavefront of wavelength component 50c is changed by the optimized phase distribution of holographic optical element 44 for wavelength component 50c and the optimized phase distribution of holographic optical element 45 for wavelength component 50c. Wavelength component 50c is diffracted at each of holographic optical elements 44, 45.

Each of the plurality of wavelength components 50a, 50b, 50c travels via each of the plurality of holographic optical elements 44, 45 as non-zeroth-order diffracted light (for example, first-order diffracted light or the like) at each of the plurality of holographic optical elements 44, 45. Phase distribution machine learning unit 33 outputs holographic optical system model 22 including the optimized phase distribution.

In each of the plurality of holographic optical elements 44, 45, a difference between the maximum phase of the optimized phase distribution and the minimum phase of the optimized phase distribution with respect to each of the plurality of wavelength components 50a, 50b, 50c is, for example, less than 2π. Therefore, zeroth-order diffracted light 53 and zeroth-order diffracted light 55 are generated from the plurality of wavelength components 50a, 50b, 50c at the plurality of holographic optical elements 44, 45. Zeroth-order diffracted light 53 includes zeroth-order diffracted light 53a, zeroth-order diffracted light 53b, and zeroth-order diffracted light 53c. Zeroth-order diffracted light 55 includes zeroth-order diffracted light 55a, zeroth-order diffracted light 55b, and zeroth-order diffracted light 55c.

As with the machine learning for holographic optical system model 21 in the first embodiment, the machine learning for holographic optical system model 22 is performed by using, for example, the optical diffractive deep neural network (D²NN) and the diffraction calculation for light wave such as the shifted angular spectrum method and the shifted Fresnel diffraction method.

A content of processing in phase distribution machine learning unit 33 of the present embodiment will be described with reference to Fig. 23. Phase distribution machine learning unit 33 includes wavelength component extraction units 71, 72, 73 and phase distribution optimization module 61.

Wavelength component extraction unit 71 extracts training data 25a for wavelength component 50a from the pieces of training data 25a. Specifically, wavelength component extraction unit 71 extracts input training data 25b for wavelength component 50a from the pieces of input training data 25b of the pieces of training data 25a. Input training data 25b for wavelength component 50a is data having the same wavelength as wavelength component 50a among the pieces of input training data 25b. Wavelength component extraction unit 71 extracts output training data 25c for wavelength component 50a from the pieces of output training data 25c of the pieces of training data 25a. Output training data 25c for wavelength component 50a is data having the same wavelength as wavelength component 50a among the pieces of output training data 25c.

Wavelength component extraction unit 72 extracts training data 25a for wavelength component 50b from the pieces of training data 25a. Specifically, wavelength component extraction unit 72 extracts input training data 25b for wavelength component 50b from the pieces of input training data 25b of the pieces of training data 25a. Input training data 25b for wavelength component 50b is data having the same wavelength as wavelength component 50b among the pieces of input training data 25b. Wavelength component extraction unit 72 extracts output training data 25c for wavelength component 50b from the pieces of output training data 25c of the pieces of training data 25a. Output training data 25c for wavelength component 50b is data having the same wavelength as wavelength component 50b among the pieces of output training data 25c.

Wavelength component extraction unit 73 extracts training data 25a for wavelength component 50c from the pieces of training data 25a. Specifically, wavelength component extraction unit 73 extracts input training data 25b for wavelength component 50c from the pieces of input training data 25b of the pieces of training data 25a. Input training data 25b for wavelength component 50c is data having the same wavelength as wavelength component 50c among the pieces of input training data 25b. Wavelength component extraction unit 73 extracts output training data 25c for wavelength component 50c from the pieces of output training data 25c of the pieces of training data 25a. Output training data 25c for wavelength component 50c is data having the same wavelength as wavelength component 50c among the pieces of output training data 25c.

Phase distribution optimization module 61 optimizes, using training data set 25, the phase distribution of each of the plurality of holographic optical elements 44, 45 of holographic optical system model 22 in which the initial phase distribution has been set.

Specifically, phase distribution optimization module 61 selects one piece of training data 25a from the plurality of pieces of training data 25a included in training data set 25. Phase distribution optimization module 61 inputs input training data 25b, which is included in selected training data 25a and which has been extracted by each of wavelength component extraction units 71, 72, 73, for each of the plurality of wavelength components 50a, 50b, 50c into input plane 41 of holographic optical system model 22. A complex amplitude distribution of each of the plurality of wavelength components 50a, 50b, 50c is output to output plane 42 of holographic optical system model 22. Phase distribution optimization module 61 calculates an error between the complex amplitude distribution of each of the plurality of wavelength components 50a, 50b, 50c at output plane 42 as generated from input training data 25b of selected training data 25a and output training data 25c for each of the plurality of wavelength components 50a, 50b, 50c in selected training data 25a.

For example, phase distribution optimization module 61 calculates an error between the complex amplitude distribution of wavelength component 50a at output plane 42 as generated from input training data 25b for wavelength component 50a in selected training data 25a and output training data 25c for wavelength component 50a in selected training data 25a. Phase distribution optimization module 61 calculates an error between the complex amplitude distribution of wavelength component 50b at output plane 42 as generated from input training data 25b for wavelength component 50b in selected training data 25a and output training data 25c for wavelength component 50b in selected training data 25a. Phase distribution optimization module 61 calculates an error between the complex amplitude distribution of wavelength component 50c at output plane 42 as generated from input training data 25b for wavelength component 50c in selected training data 25a and output training data 25c for wavelength component 50c in selected training data 25a.

Phase distribution optimization module 61 updates (optimizes) the phase distribution of each of the plurality of holographic optical elements 44, 45 so as to reduce each of the errors. Any optimization algorithm may be used when phase distribution optimization module 61 updates (optimizes) the phase distribution of each of the plurality of holographic optical elements 44, 45. As the optimization algorithm, for example, a gradient method can be used, such as SGD (Stochastic Gradient Descent), Momentum SGD, AdaGrad, RMSprop, AdaDelta or Adam (Adaptive moment estimation).

Similarly, phase distribution optimization module 61 repeatedly optimizes the phase distribution of each of the plurality of holographic optical elements 44, 45 of holographic optical system model 22 based on each training data 25a (input training data 25b and output training data 25c) included in training data set 25.

Phase distribution machine learning unit 33 outputs, to storage 19 (see Fig. 17), holographic optical system model 22, which includes the optimized phase distribution, for each of the plurality of wavelength components 50a, 50b, 50c, for example. Holographic optical system model 22 including the optimized phase distribution is stored into storage 19. Holographic optical system model 22 including the optimized phase distribution may be output to storage medium 18 (see Fig. 17).

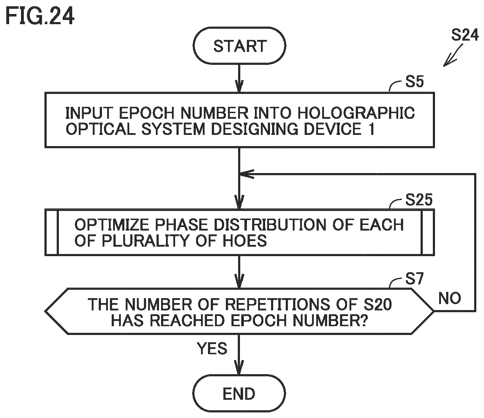

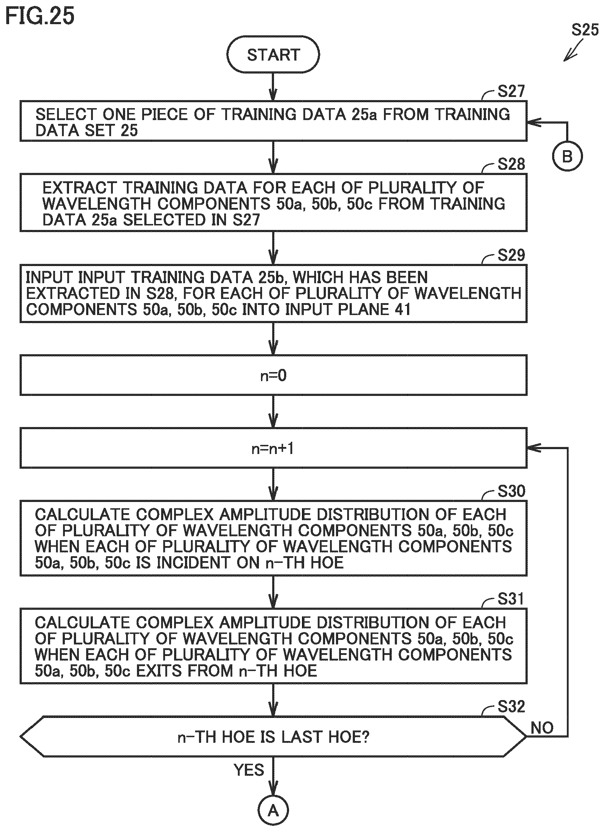

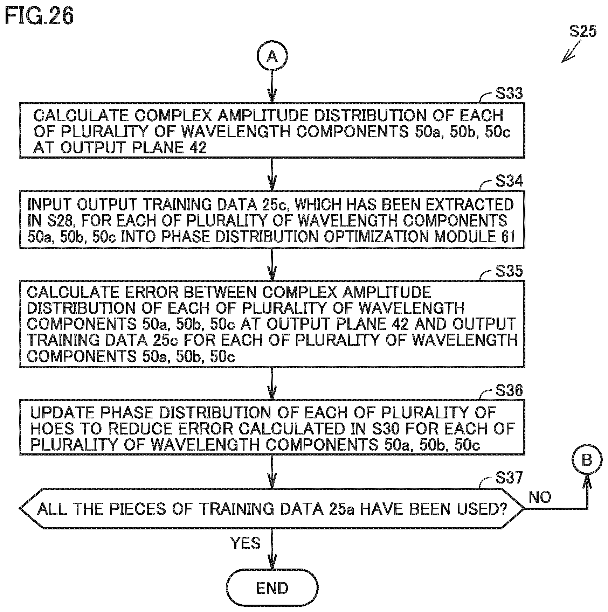

An example of the step (step S24) of performing the machine learning for holographic optical system model 22 in which the initial phase distribution has been set will be described with reference to Fig. 24. Step S24 of the present embodiment is similar to step S4 of the first embodiment, but is different from step S4 of the first embodiment, in terms of a step (step S25) of optimizing the phase distribution of each of the plurality of holographic optical elements 44, 45, due to light 50 including the plurality of wavelength components 50a, 50b, 50c (see Figs. 20 to 22). One example of step S25 will be described with reference to Figs. 25 and 26.

Referring to Fig. 25, in a step S27, one piece of training data 25a is selected from training data set 25 stored in storage 19. More specifically, one piece of training data 25a having not been through below-described steps S28 to S36 is selected from training data set 25. In the present embodiment, training data set 25 is a training data set for the plurality of wavelength components 50a, 50b, 50c, and includes the plurality of pieces of training data 25a (see Fig. 23). Each of the plurality of pieces of training data 25a includes input training data 25b (see Fig. 23) and output training data 25c (see Fig. 23) corresponding to input training data 25b. Each of input training data 25b and output training data 25c includes the plurality of wavelength components 50a, 50b, 50c.

In step S28, wavelength component extraction units 71, 72, 73 extract the pieces of training data 25a for the plurality of wavelength components 50a, 50b, 50c from training data 25a selected in step S27. Specifically, wavelength component extraction unit 71 extracts training data 25a for wavelength component 50a from selected training data 25a. Wavelength component extraction unit 72 extracts training data 25a for wavelength component 50b from selected training data 25a. Wavelength component extraction unit 73 extracts training data 25a for wavelength component 50c from selected training data 25a.

More specifically, wavelength component extraction unit 71 extracts input training data 25b for wavelength component 50a from input training data 25b of training data 25a selected in step S27. Wavelength component extraction unit 71 extracts output training data 25c for wavelength component 50a from output training data 25c of training data 25a selected in step S27. Wavelength component extraction unit 72 extracts input training data 25b for wavelength component 50b from input training data 25b of training data 25a selected in step S27. Wavelength component extraction unit 72 extracts output training data 25c for wavelength component 50b from output training data 25c of training data 25a selected in step S27. Wavelength component extraction unit 73 extracts input training data 25b for wavelength component 50c from input training data 25b of training data 25a selected in step S27. Wavelength component extraction unit 73 extracts output training data 25c for wavelength component 50c from output training data 25c of training data 25a selected in step S27.

In step S29, input training data 25b, which has been extracted in step S28, for each of the plurality of wavelength components 50a, 50b, 50c is input into input plane 41. For example, each of input training data 25b for wavelength component 50a, input training data 25b for wavelength component 50b, and input training data 25b for wavelength component 50c is converted into a complex amplitude distribution at input plane 41 and the complex amplitude distribution is input into input plane 41.

In step S30, the complex amplitude distribution of each of the plurality of wavelength components 50a, 50b, 50c when each of the wavelength components 50a, 50b, 50c is incident on the n-th holographic optical element is calculated, by the diffraction calculation for light wave such as the shifted angular spectrum method and the shifted Fresnel diffraction method, in accordance with the complex amplitude distribution of each of the plurality of wavelength components 50a, 50b, 50c when each of the plurality of wavelength components 50a, 50b, 50c exits from the n-1-th holographic optical element and the arrangement of the n-th holographic optical element with respect to the n-1-th holographic optical element. When n=1, the n-1-th holographic optical element is regarded as input plane 41, and the arrangement of the first holographic optical element with respect to input plane 41 in optical condition 20 received in step S21 is used.

In step S31, the complex amplitude distribution of each of the plurality of wavelength components 50a, 50b, 50c when each of the plurality of wavelength components 50a, 50b, 50c exits from the n-th holographic optical element is calculated. The complex amplitude distribution of each of the plurality of wavelength components 50a, 50b, 50c when each of the plurality of wavelength components 50a, 50b, 50c exits from the n-th holographic optical element is given as a product of the complex amplitude distribution of each of the plurality of wavelength components 50a, 50b, 50c when each of the plurality of wavelength components 50a, 50b, 50c is incident on the n-th holographic optical element and the phase distribution of the n-th holographic optical element for each of the plurality of wavelength components 50a, 50b, 50c.

In step S32, it is determined whether or not the n-th holographic optical element is the last holographic optical element. The last holographic optical element means the holographic optical element closest to output plane 42 when viewed along the optical path of holographic optical system model 22 (optical path of light 50). For example, in the holographic optical system shown in Figs. 20 to 22, holographic optical element 45 is the last holographic optical element.

When the n-th holographic optical element is not the last holographic optical element, each of steps S30 and S31 is performed for the n+1-th holographic optical element. In step S30, the arrangement of the n+1-th holographic optical element with respect to the n-th holographic optical element in optical condition 20 received in step S21 is used.

When the n-th holographic optical element is the last holographic optical element, the process proceeds to step S33. In step S33, the complex amplitude distribution of each of the plurality of wavelength components 50a, 50b, 50c at output plane 42 is calculated, by the diffraction calculation for light wave such as the shifted angular spectrum method and the shifted Fresnel diffraction method, in accordance with the complex amplitude distribution of each of the plurality of wavelength components 50a, 50b, 50c when each of the plurality of wavelength components 50a, 50b, 50c exits from the last holographic optical element and the arrangement of output plane 42 with respect to the last holographic optical element in optical condition 20 received in step S1.

In step S34, output training data 25c, which has been extracted in step S28, for each of the plurality of wavelength components 50a, 50b, 50c is input into phase distribution optimization module 61. Specifically, each of output training data 25c for wavelength component 50a, output training data 25c for wavelength component 50b, and output training data 25c for wavelength component 50c as extracted from output training data 25c included in training data 25a selected in step S27 is converted into a complex amplitude distribution at output plane 42, and is input into phase distribution optimization module 61.

In step S35, an error between the complex amplitude distribution of each of the plurality of wavelength components 50a, 50b, 50c at output plane 42 as calculated in step S33 and output training data 25c for each of the plurality of wavelength components 50a, 50b, 50c as input into phase distribution optimization module 61 in step S34 is calculated. Specifically, an error between the complex amplitude distribution of wavelength component 50a at output plane 42 and output training data 25c for wavelength component 50a, an error between the complex amplitude distribution of wavelength component 50b at output plane 42 and output training data 25c for wavelength component 50b, and an error between the complex amplitude distribution of wavelength component 50c at output plane 42 and output training data 25c for wavelength component 50c are calculated.

In step S36, the phase distribution of each of the plurality of holographic optical elements 44, 45 is updated (optimized) so as to reduce each of the errors calculated in step S35 for each of the plurality of wavelength components 50a, 50b, 50c. For example, as the optimization algorithm for the phase distribution of each of the plurality of holographic optical elements 44, 45, a gradient method can be used, such as SGD (Stochastic Gradient Descent), Momentum SGD, AdaGrad, RMSprop, AdaDelta, or Adam (Adaptive moment estimation).

In a step S37, it is determined whether or not all the pieces of training data 25a have been used to update (optimize) the phase distributions of the plurality of holographic optical elements 44, 45. When not all the pieces of training data 25a have been used, the process returns to step S27 so as to select one of unused pieces of training data 25a, and steps S28 to S36 are performed with regard to training data 25a newly selected. When all the pieces of training data 25a have been used to update (optimize) the phase distributions of the plurality of holographic optical elements 44, 45, the step (step S25) of optimizing the phase distribution of each of the plurality of holographic optical elements 44, 45 of holographic optical system model 22 is ended.

Phase distribution machine learning unit 33 outputs, to storage 19, holographic optical system model 22, which includes the optimized phase distribution, for the plurality of wavelength components 50a, 50b, 50c, for example (see Fig. 17). Holographic optical system model 22, which includes the optimized phase distribution, for the plurality of wavelength components 50a, 50b, 50c is stored into storage 19. Holographic optical system model 22, which includes the optimized phase distribution, for the plurality of wavelength components 50a, 50b, 50c may be output to storage medium 18 (see Fig. 17).

### <Holographic Optical System Designing Program 60>

A holographic optical system designing program 60 (see Fig. 17) causes processor 12 (see Fig. 17) to perform the method of designing the holographic optical system according to the present embodiment. A computer-readable recording medium (non-transitory computer-readable recording medium such as storage medium 18) of the present embodiment may store a program such as holographic optical system designing program 60.

### (Modification)

Light 50 may include two wavelength components or may include four or more wavelength components.

The method of designing the holographic optical system and holographic optical system designing program 60 according to the present embodiment exhibit the following effects in addition to the effects of the method of designing the holographic optical system and holographic optical system designing program 60 according to the first embodiment.

In the method of designing the holographic optical system according to the present embodiment, light 50 includes the plurality of wavelength components 50a, 50b, 50c having wavelengths different from one another.

Therefore, it is possible to efficiently design the holographic optical system for the plurality of wavelength components 50a, 50b, 50c so as to prevent each of zeroth-order diffracted light 53 and zeroth-order diffracted light 55 from being overlapped with output plane 42.

In the method of designing the holographic optical system according to the present embodiment, in the step (step S23) of setting the initial phase distribution to each of the plurality of holographic optical elements 44, 45 in holographic optical system model 22, the initial phase distribution for each of the plurality of wavelength components 50a, 50b, 50c is set to each of the plurality of holographic optical elements 44, 45 so as to allow each of the plurality of wavelength components 50a, 50b, 50c to travel from input plane 41 via the plurality of holographic optical elements 44, 45 and exit to output plane 42. In the step (step S24) of performing the machine learning for holographic optical system model 22 in which the initial phase distribution has been set, the phase distribution of each of the plurality of holographic optical elements 44, 45 for each of the plurality of wavelength components 50a, 50b, 50c is optimized by the machine learning.

Therefore, the functions of the holographic optical system for the plurality of wavelength components 50a, 50b, 50c can be implemented more accurately. The optimized phase distribution of each of the plurality of holographic optical elements 44, 45 to attain the optical path of each of the plurality of wavelength components 50a, 50b, 50c from input plane 41 to output plane 42 via the plurality of holographic optical elements 44, 45 can be obtained more securely in a shorter period of time with a smaller amount of computation. It is possible to more efficiently design the holographic optical system for plurality of wavelength components 50a, 50b, 50c so as to prevent each of zeroth-order diffracted light 53 and zeroth-order diffracted light 55 from being overlapped with output plane 42.

Holographic optical system designing program 60 according to the present embodiment causes processor 12 to perform each step of the method of designing the holographic optical system according to the present embodiment. Therefore, it is possible to efficiently design the holographic optical system for the plurality of wavelength components 50a, 50b, 50c so as to prevent each of zeroth-order diffracted light 53 and zeroth-order diffracted light 55 from being overlapped with output plane 42.

### (Third Embodiment)

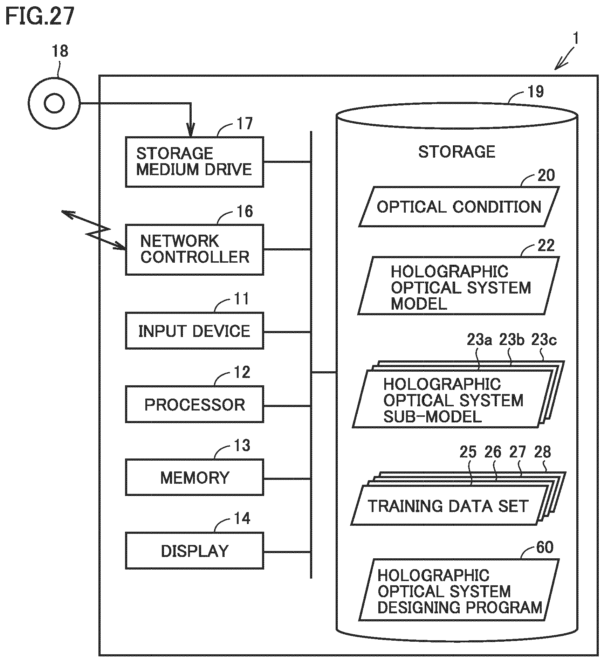

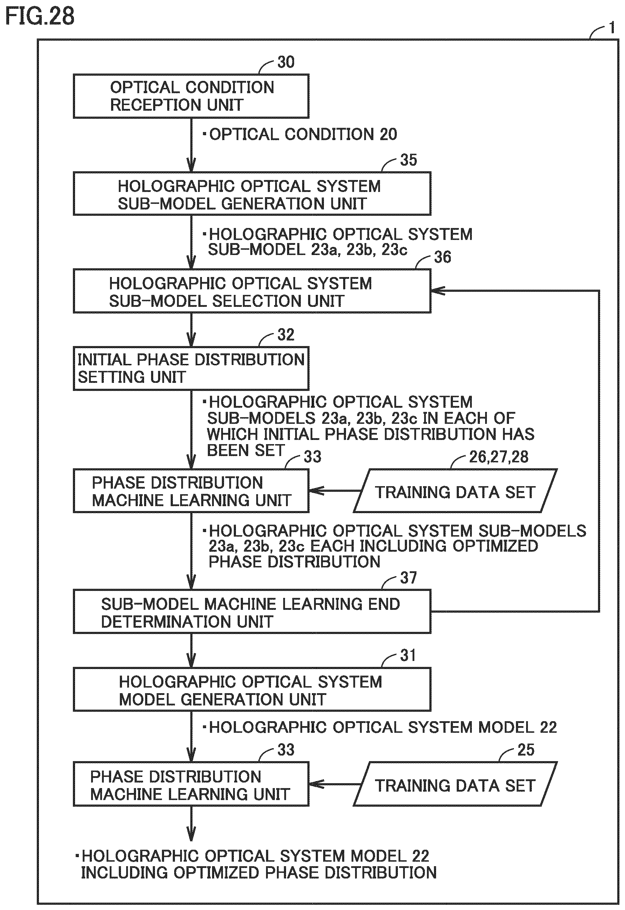

A holographic optical system designing device 1 according to a third embodiment will be described with reference to Figs. 27 and 28. Holographic optical system designing device 1 according to the present embodiment is similar to holographic optical system designing device 1 according to the second embodiment, but is different from holographic optical system designing device 1 according to the second embodiment mainly in the following points.

### <Hardware Configuration>

Referring to Fig. 27, in the present embodiment, a plurality of holographic optical system sub-models 23a, 23b, 23c and training data sets 26, 27, 28 are stored in storage 19 in addition to optical condition 20, holographic optical system model 22, training data set 25, and holographic optical system designing program 60.

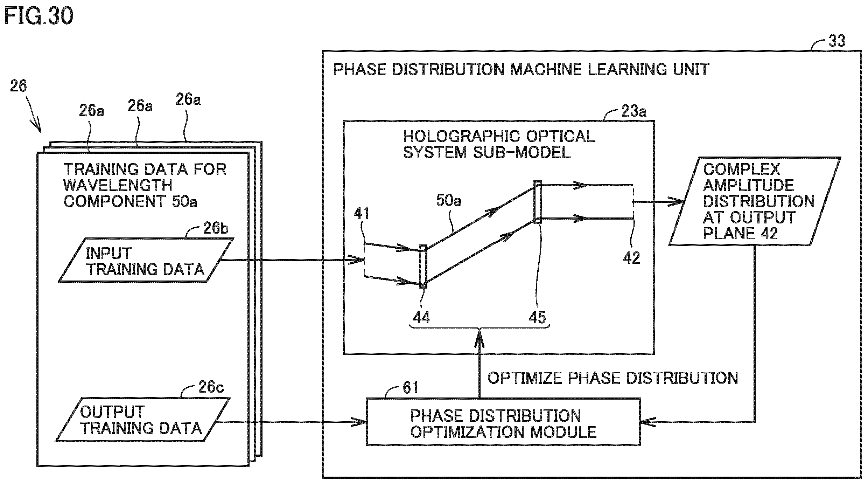

The plurality of holographic optical system sub-models 23a, 23b, 23c are generated on the computer (holographic optical system designing device 1). As shown in Figs. 30 to 32, each of the plurality of holographic optical system sub-models 23a, 23b, 23c includes an input plane 41, a plurality of holographic optical elements 44, 45, and an output plane 42. Each of the plurality of holographic optical system sub-models 23a, 23b, 23c is a holographic optical system sub-model for a single wavelength component, and corresponds to one wavelength component of the plurality of wavelength components 50a, 50b, 50c.

Specifically, holographic optical system sub-model 23a is a holographic optical system sub-model for wavelength component 50a and can provide a phase distribution for wavelength component 50a to each of the plurality of holographic optical elements 44, 45. Holographic optical system sub-model 23b is a holographic optical system sub-model for wavelength component 50b and can provide a phase distribution for wavelength component 50b to each of the plurality of holographic optical elements 44, 45. Holographic optical system sub-model 23c is a holographic optical system sub-model for wavelength component 50c and can provide a phase distribution for wavelength component 50c to each of the plurality of holographic optical elements 44, 45.

Referring to Fig. 27, training data set 25 of the present embodiment is the same as training data set 25 of the second embodiment. Each of training data sets 26, 27, 28 is used to train a corresponding holographic optical system sub-model of the plurality of holographic optical system sub-models 23a, 23b, 23c. Specifically, training data set 26 is a training data set for wavelength component 50a, and is used to train holographic optical system sub-model 23a for wavelength component 50a. Training data set 27 is a training data set for wavelength component 50b and is used to train holographic optical system sub-model 23b for wavelength component 50b. Training data set 28 is a training data set for wavelength component 50c and is used to train holographic optical system sub-model 23c for wavelength component 50c.

As shown in Fig. 30, training data set 26 includes a plurality of pieces of training data 26a. Each of the plurality of pieces of training data 26a includes input training data 26b and output training data 26c corresponding to input training data 26b. Each of input training data 26b and output training data 26c is formed of wavelength component 50a. Input training data 26b and output training data 26c are, for example, red images.

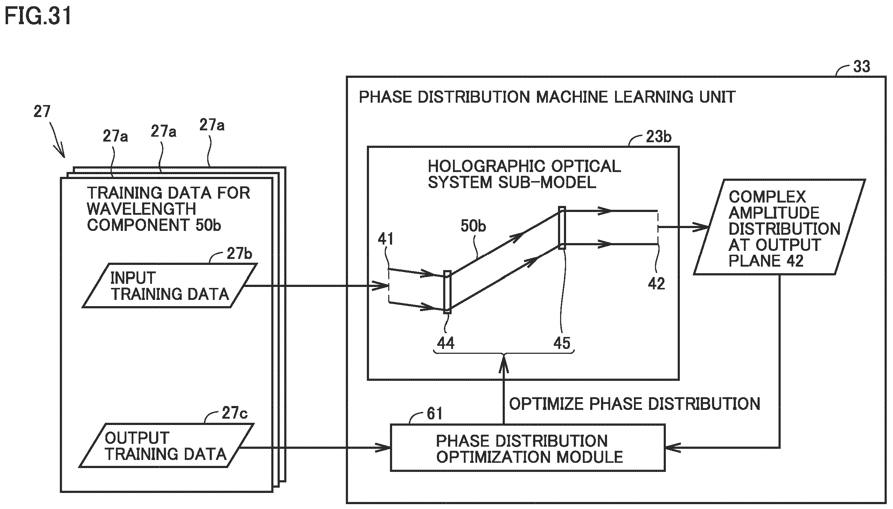

As shown in Fig. 31, training data set 27 includes a plurality of pieces of training data 27a. Each of the plurality of pieces of training data 27a includes input training data 27b and output training data 27c corresponding to input training data 27b. Each of input training data 27b and output training data 27c is formed of wavelength component 50b. Input training data 27b and output training data 27c are, for example, green images.

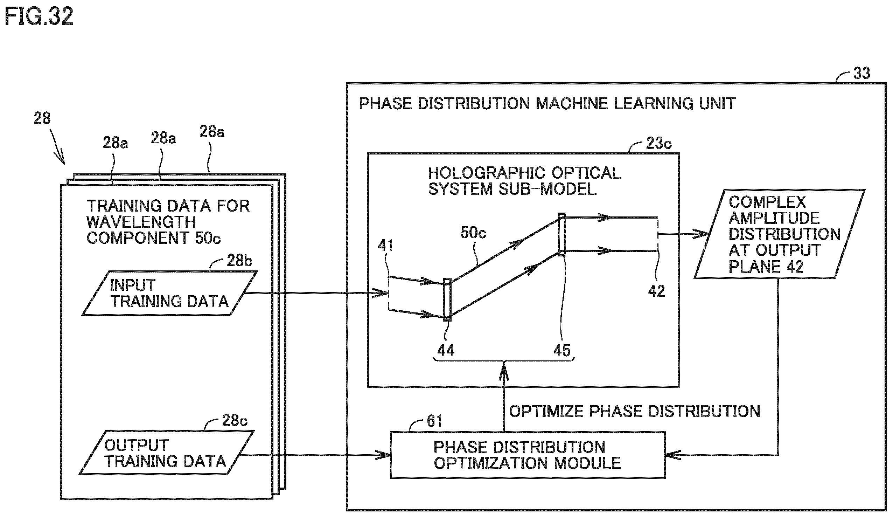

As shown in Fig. 32, training data set 28 includes a plurality of pieces of training data 28a. Each of the plurality of pieces of training data 28a includes input training data 28b and output training data 28c corresponding to input training data 28b. Each of input training data 28b and output training data 28c is formed of wavelength component 50c. Input training data 28b and output training data 28c are, for example, blue images.

### <Functional Configuration>

Referring to Fig. 28, holographic optical system designing device 1 according to the present embodiment further includes a holographic optical system sub-model generation unit 35, a holographic optical system sub-model selection unit 36, and a sub-model machine learning end determination unit 37.

Holographic optical system sub-model generation unit 35 generates holographic optical system sub-models 23a, 23b, 23c on the computer (holographic optical system designing device 1) in accordance with the number of the plurality of holographic optical elements 44, 45, the size of each of the plurality of holographic optical elements 44, 45, and the arrangements of input plane 41, the plurality of holographic optical elements 44, 45 and output plane 42 in optical condition 20.

Each of holographic optical system sub-models 23a, 23b, 23c is a holographic optical system sub-model for a single wavelength component as with holographic optical system model 21 of the first embodiment. Specifically, holographic optical system sub-model 23a is a holographic optical system sub-model for wavelength component 50a. Holographic optical system sub-model 23b is a holographic optical system sub-model for wavelength component 50b. Holographic optical system sub-model 23c is a holographic optical system sub-model for wavelength component 50c.

In holographic optical system sub-model 23a, wavelength component 50a travels from input plane 41 toward output plane 42 via the plurality of holographic optical elements 44, 45, thereby generating zeroth-order diffracted light at each of the plurality of holographic optical elements 44, 45. Input plane 41, the plurality of holographic optical elements 44, 45, and output plane 42 of holographic optical system sub-model 23a are arranged to avoid the zeroth-order diffracted light from being overlapped with output plane 42.

In holographic optical system sub-model 23b, wavelength component 50b travels from input plane 41 toward output plane 42 via the plurality of holographic optical elements 44, 45, thereby generating zeroth-order diffracted light at each of the plurality of holographic optical elements 44, 45. Input plane 41, the plurality of holographic optical elements 44, 45, and output plane 42 of holographic optical system sub-model 23b are arranged to avoid the zeroth-order diffracted light from being overlapped with output plane 42.

In holographic optical system sub-model 23c, wavelength component 50c travels from input plane 41 toward output plane 42 via the plurality of holographic optical elements 44, 45, thereby generating the zeroth-order diffracted light at each of the plurality of holographic optical elements 44, 45. Input plane 41, the plurality of holographic optical elements 44, 45, and output plane 42 of holographic optical system sub-model 23c are arranged to avoid the zeroth-order diffracted light from being overlapped with output plane 42.

Referring to Fig. 28, holographic optical system sub-model selection unit 36 selects one of the plurality of holographic optical system sub-models 23a, 23b, 23c. More specifically, holographic optical system sub-model selection unit 36 selects, from the plurality of holographic optical system sub-models 23a, 23b, 23c, one holographic optical system sub-model not having been through the machine learning by phase distribution machine learning unit 33 yet.

Referring to Fig. 28, as with the second embodiment, initial phase distribution setting unit 32 generates holographic optical system model 22 in which the initial phase distribution has been set, from holographic optical system model 22 generated by holographic optical system model generation unit 31. Initial phase distribution setting unit 32 further generates a holographic optical system sub-model in which the initial phase distribution has been set, from the holographic optical system sub-model selected by holographic optical system sub-model selection unit 36.

Specifically, the operator inputs the initial phase distribution for each of the plurality of wavelength components 50a, 50b, 50c into holographic optical system designing device 1 (see Fig. 27) using input device 11 (see Fig. 27). Initial phase distribution setting unit 32 receives the initial phase distribution for each of the plurality of wavelength components 50a, 50b, 50c. Initial phase distribution setting unit 32 sets, to each of the plurality of holographic optical elements 44, 45 in the holographic optical system sub-model selected by holographic optical system sub-model selection unit 36, the initial phase distribution for the wavelength component corresponding to the holographic optical system sub-model selected by holographic optical system sub-model selection unit 36. In this way, initial phase distribution setting unit 32 generates each of holographic optical system sub-models 23a, 23b, 23c in each of which the initial phase distribution has been set.

For example, when holographic optical system sub-model selection unit 36 selects holographic optical system sub-model 23a, initial phase distribution setting unit 32 sets the initial phase distribution for wavelength component 50a to each of the plurality of holographic optical elements 44, 45 of holographic optical system sub-model 23a so as to allow wavelength component 50a to travel from input plane 41 of holographic optical system sub-model 23a via the plurality of holographic optical elements 44, 45 of holographic optical system sub-model 23a and exit to output plane 42 of holographic optical system sub-model 23a. Wavelength component 50a travels via each of the plurality of holographic optical elements 44, 45 of holographic optical system sub-model 23a as non-zeroth-order diffracted light (for example, first-order diffracted light or the like) at each of the plurality of holographic optical elements 44, 45 of holographic optical system sub-model 23a.

When holographic optical system sub-model selection unit 36 selects holographic optical system sub-model 23b, initial phase distribution setting unit 32 sets the initial phase distribution for wavelength component 50b to each of the plurality of holographic optical elements 44, 45 of holographic optical system sub-model 23b so as to allow wavelength component 50b to travel from input plane 41 of holographic optical system sub-model 23b via the plurality of holographic optical elements 44, 45 of holographic optical system sub-model 23b and exit to output plane 42 of holographic optical system sub-model 23b. Wavelength component 50b travels via each of the plurality of holographic optical elements 44, 45 of holographic optical system sub-model 23b as non-zeroth-order diffracted light (for example, first-order diffracted light or the like) at each of the plurality of holographic optical elements 44, 45 of holographic optical system sub-model 23b.

When holographic optical system sub-model selection unit 36 selects holographic optical system sub-model 23c, initial phase distribution setting unit 32 sets the initial phase distribution for wavelength component 50c to each of the plurality of holographic optical elements 44, 45 of holographic optical system sub-model 23c so as to allow wavelength component 50c to travel from input plane 41 of holographic optical system sub-model 23c via the plurality of holographic optical elements 44, 45 of holographic optical system sub-model 23c and exit to output plane 42 of holographic optical system sub-model 23c. Wavelength component 50c travels via each of the plurality of holographic optical elements 44, 45 of holographic optical system sub-model 23c as non-zeroth-order diffracted light (for example, first-order diffracted light or the like) at each of the plurality of holographic optical elements 44, 45 of holographic optical system sub-model 23c.

In each of the plurality of holographic optical elements 44, 45 of the holographic optical system sub-model selected by holographic optical system sub-model selection unit 36, a difference between the maximum phase of the initial phase distribution and the minimum phase of the initial phase distribution with respect to the wavelength component corresponding to the holographic optical system sub-model selected by holographic optical system sub-model selection unit 36 is, for example, less than 2π. Therefore, in each of the plurality of holographic optical elements 44, 45 of the holographic optical system sub-model selected by holographic optical system sub-model selection unit 36, the zeroth-order diffracted light is generated from the wavelength component corresponding to the holographic optical system sub-model selected by holographic optical system sub-model selection unit 36.

Referring to Fig. 28, phase distribution machine learning unit 33 performs machine learning for the holographic optical system sub-model, which has been selected by holographic optical system sub-model selection unit 36 and in which the initial phase distribution has been set. Phase distribution machine learning unit 33 optimizes, by the machine learning, the phase distribution of each of the plurality of holographic optical elements 44, 45 of the holographic optical system sub-model which has been selected by holographic optical system sub-model selection unit 36 and in which the initial phase distribution has been set, so as to implement the functions of the holographic optical system more accurately.

When holographic optical system sub-model selection unit 36 selects holographic optical system sub-model 23a, phase distribution machine learning unit 33 provides the optimized phase distribution for wavelength component 50a to each of the plurality of holographic optical elements 44, 45 of holographic optical system sub-model 23a. In this way, phase distribution machine learning unit 33 outputs holographic optical system sub-model 23a, which includes the optimized phase distribution, for wavelength component 50a.

When holographic optical system sub-model selection unit 36 selects holographic optical system sub-model 23b, phase distribution machine learning unit 33 provides the optimized phase distribution for wavelength component 50b to each of the plurality of holographic optical elements 44, 45 of holographic optical system sub-model 23b. In this way, phase distribution machine learning unit 33 outputs holographic optical system sub-model 23b, which includes the optimized phase distribution, for wavelength component 50b.

When holographic optical system sub-model selection unit 36 selects holographic optical system sub-model 23c, phase distribution machine learning unit 33 provides the optimized phase distribution for wavelength component 50c to each of the plurality of holographic optical elements 44, 45 of holographic optical system sub-model 23c. In this way, phase distribution machine learning unit 33 outputs holographic optical system sub-model 23c, which includes the optimized phase distribution, for wavelength component 50c.

In each of the plurality of holographic optical elements 44, 45 of the holographic optical system sub-model selected by holographic optical system sub-model selection unit 36, a difference between the maximum phase of the optimized phase distribution and the minimum phase of the optimized phase distribution with respect to the wavelength component corresponding to the holographic optical system sub-model selected by holographic optical system sub-model selection unit 36 is, for example, less than 2π. Therefore, in each of the plurality of holographic optical elements 44, 45 of the holographic optical system sub-model selected by holographic optical system sub-model selection unit 36, the zeroth-order diffracted light is generated from the wavelength component corresponding to the holographic optical system sub-model selected by holographic optical system sub-model selection unit 36.

Referring to Fig. 28, sub-model machine learning end determination unit 37 determines whether or not the machine learning for all of the plurality of holographic optical system sub-models 23a, 23b, 23c by phase distribution machine learning unit 33 has been ended.

Referring to Fig. 28, in the present embodiment, holographic optical system model generation unit 31 generates holographic optical system model 22 from the plurality of holographic optical system sub-models 23a, 23b, 23c. For example, holographic optical system model generation unit 31 generates holographic optical system model 22 by integrating the plurality of holographic optical system sub-models 23a, 23b, 23c having been through the machine learning by phase distribution machine learning unit 33.

### <Method of Designing Holographic Optical System>

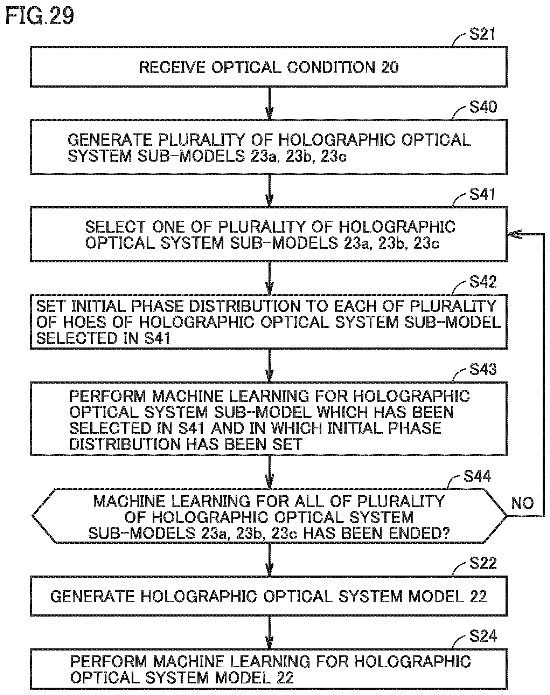

A method of designing the holographic optical system according to the present embodiment will be described with reference to Fig. 29. The method of designing the holographic optical system according to the present embodiment is similar to the method of designing the holographic optical system according to the second embodiment, but is different from the method of designing the holographic optical system according to the second embodiment in the following points.

Referring to Fig. 29, in addition to steps S21, S22, and S24 (see Fig. 19) of the second embodiment, the method of designing the holographic optical system according to the present embodiment further includes: a step (step S40) of generating the plurality of holographic optical system sub-models 23a, 23b, 23c; a step (step S41) of selecting one of the plurality of holographic optical system sub-models 23a, 23b, 23c; a step (step S42) of setting the initial phase distribution to each of the plurality of holographic optical elements 44, 45 of the holographic optical system sub-model selected in step S41; a step (step S43) of performing machine learning for the holographic optical system sub-model which has been selected in step S41 and in which the initial phase distribution has been set; and a step (step S44) of determining whether or not the machine learning for all of the plurality of holographic optical system sub-models 23a, 23b, 23c has been ended. Steps S40 to S44 are performed between steps S21 and S22.

Referring to Figs. 29 to 32, the step (step S40) of generating holographic optical system sub-models 23a, 23b, 23c in the present embodiment is performed by holographic optical system sub-model generation unit 35 (see Fig. 28). The step (step S40) of generating each of holographic optical system sub-models 23a, 23b, 23c is the same as the step (step S2) of generating holographic optical system model 21 in the first embodiment.

Specifically, in step S40, holographic optical system sub-model generation unit 35 generates holographic optical system sub-model 23a for wavelength component 50a, holographic optical system sub-model 23b for wavelength component 50b, and holographic optical system sub-model 23c for wavelength component 50c on the computer (holographic optical system designing device 1) in accordance with the number of the plurality of holographic optical elements 44, 45, the size of each of the plurality of holographic optical elements 44, 45, and the arrangements of input plane 41, the plurality of holographic optical elements 44, 45 and output plane 42 in optical condition 20 received in step S21.

In holographic optical system sub-model 23a, wavelength component 50a travels from input plane 41 toward output plane 42 via the plurality of holographic optical elements 44, 45, thereby generating the zeroth-order diffracted light at each of the plurality of holographic optical elements 44, 45. Input plane 41, the plurality of holographic optical elements 44, 45, and output plane 42 of holographic optical system sub-model 23a are arranged to avoid the zeroth-order diffracted light from being overlapped with output plane 42.

In holographic optical system sub-model 23b, wavelength component 50b travels from input plane 41 toward output plane 42 via the plurality of holographic optical elements 44, 45, thereby generating the zeroth-order diffracted light at each of the plurality of holographic optical elements 44, 45. Input plane 41, the plurality of holographic optical elements 44, 45, and output plane 42 of holographic optical system sub-model 23b are arranged to avoid the zeroth-order diffracted light from being overlapped with output plane 42.

In holographic optical system sub-model 23c, wavelength component 50c travels from input plane 41 toward output plane 42 via the plurality of holographic optical elements 44, 45, thereby generating the zeroth-order diffracted light at each of the plurality of holographic optical elements 44, 45. Input plane 41, the plurality of holographic optical elements 44, 45, and output plane 42 of holographic optical system sub-model 23c are arranged to avoid the zeroth-order diffracted light from being overlapped with output plane 42.

The step (step S41) of selecting one holographic optical system sub-model of the plurality of holographic optical system sub-models 23a, 23b, 23c generated in step S40 is performed by holographic optical system sub-model selection unit 36 (see Fig. 28). Specifically, holographic optical system sub-model selection unit 36 selects one holographic optical system sub-model, which has not been through below-described steps S42 and S43 yet, from the plurality of holographic optical system sub-models 23a, 23b, 23c.

The step (step S42) of setting the initial phase distribution to each of the plurality of holographic optical elements 44, 45 of the holographic optical system sub-model selected in step S41 is performed by initial phase distribution setting unit 32 (see Fig. 28). Step S42 of the present embodiment is similar to step S3 of the first embodiment, but the initial phase distribution in step S42 of the present embodiment is an initial phase distribution for a wavelength component corresponding to the holographic optical system sub-model selected by holographic optical system sub-model selection unit 36.

Specifically, in step S42, the operator inputs the initial phase distribution for each of the plurality of wavelength components 50a, 50b, 50c into holographic optical system designing device 1 (see Fig. 27) using input device 11 (see Fig. 27). Initial phase distribution setting unit 32 receives the initial phase distribution for each of the plurality of wavelength components 50a, 50b, 50c. Initial phase distribution setting unit 32 sets, to each of the plurality of holographic optical elements 44, 45 of the holographic optical system sub-model selected by holographic optical system sub-model selection unit 36, the initial phase distribution for the wavelength component corresponding to the holographic optical system sub-model selected by holographic optical system sub-model selection unit 36. In this way, initial phase distribution setting unit 32 generates the holographic optical system sub-model, which has been selected in step S41 and in which the initial phase distribution has been set.

For example, when holographic optical system sub-model selection unit 36 selects holographic optical system sub-model 23a in step S41, initial phase distribution setting unit 32 sets the initial phase distribution for wavelength component 50a to each of the plurality of holographic optical elements 44, 45 of holographic optical system sub-model 23a so as to allow wavelength component 50a to travel from input plane 41 of holographic optical system sub-model 23a via the plurality of holographic optical elements 44, 45 of holographic optical system sub-model 23a and exit to output plane 42 of holographic optical system sub-model 23a. Wavelength component 50a travels via each of the plurality of holographic optical elements 44, 45 of holographic optical system sub-model 23a as non-zeroth-order diffracted light (for example, first-order diffracted light or the like) at each of the plurality of holographic optical elements 44, 45 of holographic optical system sub-model 23a.

When holographic optical system sub-model selection unit 36 selects holographic optical system sub-model 23b in step S41, initial phase distribution setting unit 32 sets the initial phase distribution for wavelength component 50b to each of the plurality of holographic optical elements 44, 45 of holographic optical system sub-model 23b so as to allow wavelength component 50b to travel from input plane 41 of holographic optical system sub-model 23b via the plurality of holographic optical elements 44, 45 of holographic optical system sub-model 23b and exit to output plane 42 of holographic optical system sub-model 23b. Wavelength component 50b travels via each of the plurality of holographic optical elements 44, 45 of holographic optical system sub-model 23b as non-zeroth-order diffracted light (for example, first-order diffracted light or the like) at each of the plurality of holographic optical elements 44, 45 of holographic optical system sub-model 23b.

When holographic optical system sub-model selection unit 36 selects holographic optical system sub-model 23c in step S41, initial phase distribution setting unit 32 sets the initial phase distribution for wavelength component 50c to each of the plurality of holographic optical elements 44, 45 of holographic optical system sub-model 23c so as to allow wavelength component 50c to travel from input plane 41 of holographic optical system sub-model 23c via the plurality of holographic optical elements 44, 45 of holographic optical system sub-model 23c and exit to output plane 42 of holographic optical system sub-model 23c. Wavelength component 50c travels via each of the plurality of holographic optical elements 44, 45 of holographic optical system sub-model 23c as non-zeroth-order diffracted light (for example, first-order diffracted light or the like) at each of the plurality of holographic optical elements 44, 45 of holographic optical system sub-model 23c.

In each of the plurality of holographic optical elements 44, 45 of holographic optical system sub-model selected in step S41, a difference between the maximum phase of the initial phase distribution and the minimum phase of the initial phase distribution with respect to the wavelength component corresponding to the holographic optical system sub-model selected in step S41 is, for example, less than 2π. Therefore, in each of the plurality of holographic optical elements 44, 45 of the holographic optical system sub-model selected in step S41, the zeroth-order diffracted light is generated from the wavelength component corresponding to the holographic optical system sub-model selected in step S41.

The step (step S43) of performing the machine learning for the holographic optical system sub-model which has been selected in step S41 and in which the initial phase distribution has been set is performed by phase distribution machine learning unit 33 (see Fig. 28). In step S43, phase distribution machine learning unit 33 optimizes the phase distribution of each of the plurality of holographic optical elements 44, 45 of the holographic optical system sub-model selected in step S41 so as to implement the functions of the holographic optical system more accurately. Phase distribution machine learning unit 33 outputs the holographic optical system sub-model including the optimized phase distribution.

Step S43 is similar to step S4 of the first embodiment; however, in step S43, the machine learning for the holographic optical system sub-model, which has been selected in step S41 and in which the initial phase distribution has been set, is performed using the training data set for the wavelength component corresponding to the holographic optical system sub-model selected in step S41.

For example, when holographic optical system sub-model 23a is selected in step S41, the machine learning for holographic optical system sub-model 23a is performed using training data set 26 (see Fig. 30) for wavelength component 50a in step S43. Specifically, an error between the complex amplitude distribution of wavelength component 50a generated at output plane 42 of the holographic optical system sub-model 23a by inputting input training data 26b for wavelength component 50a into input plane 41 of holographic optical system sub-model 23a and output training data 26c for wavelength component 50a input into phase distribution optimization module 61 is calculated. Phase distribution optimization module 61 updates (optimizes) the phase distribution of each of the plurality of holographic optical elements 44, 45 of holographic optical system sub-model 23a so as to reduce the error.

When holographic optical system sub-model 23b is selected in step S41, the machine learning for holographic optical system sub-model 23b is performed using training data set 27 (see Fig. 31) for wavelength component 50b in step S43. Specifically, an error between the complex amplitude distribution of wavelength component 50b generated at output plane 42 of holographic optical system sub-model 23b by inputting input training data 27b for wavelength component 50b into input plane 41 of holographic optical system sub-model 23b and output training data 27c for wavelength component 50b input into phase distribution optimization module 61 is calculated. Phase distribution optimization module 61 updates (optimizes) the phase distribution of each of the plurality of holographic optical elements 44, 45 of holographic optical system sub-model 23b so as to reduce the error.

When holographic optical system sub-model 23c is selected in step S41, the machine learning for holographic optical system sub-model 23c is performed using training data set 28 (see Fig. 32) for wavelength component 50c in step S43. Specifically, an error between the complex amplitude distribution of wavelength component 50c generated at output plane 42 of holographic optical system sub-model 23c by inputting input training data 28b for wavelength component 50c into input plane 41 of holographic optical system sub-model 23c and output training data 28c for wavelength component 50c input into phase distribution optimization module 61 is calculated. Phase distribution optimization module 61 updates (optimizes) the phase distribution of each of the plurality of holographic optical elements 44, 45 of holographic optical system sub-model 23c so as to reduce the error.

In each of the plurality of holographic optical elements 44, 45 of the holographic optical system sub-model selected in step S41, a difference between the maximum phase of the optimized phase distribution and the minimum phase of the optimized phase distribution with respect to the wavelength component corresponding to the holographic optical system sub-model selected in step S41 is, for example, less than 2π. Therefore, in each of the plurality of holographic optical elements 44, 45 of the holographic optical system sub-model selected in step S41, the zeroth-order diffracted light is generated from the wavelength component corresponding to the holographic optical system sub-model selected in step S41.

The step (step S44) of determining whether or not the machine learning for all of the plurality of holographic optical system sub-models 23a, 23b, 23c has been ended is performed by sub-model machine learning end determination unit 37 (see Fig. 28). When the machine learning for all of the plurality of holographic optical system sub-models 23a, 23b, 23c has not been ended, the process returns to step S41, one holographic optical system sub-model not having been through the machine learning yet is newly selected from the plurality of holographic optical system sub-models 23a, 23b, 23c, and steps S42 and S43 are performed with regard to the newly selected holographic optical system sub-model.

When the machine learning for all of the plurality of holographic optical system sub-models 23a, 23b, 23c has been ended, the process proceeds to the step (step S22) of generating holographic optical system model 22. Step S22 of the present embodiment is performed by holographic optical system model generation unit 31. In the present embodiment, holographic optical system model generation unit 31 generates holographic optical system model 22 for the plurality of wavelength components 50a, 50b, 50c from holographic optical system sub-models 23a, 23b, 23c including the individually optimized phase distributions. For example, holographic optical system model generation unit 31 generates holographic optical system model 22 for the plurality of wavelength components 50a, 50b, 50c by integrating holographic optical system sub-models 23a, 23b, 23c including the individually optimized phase distributions.

Step S24 of the present embodiment is performed by phase distribution machine learning unit 33. In step S24 of the present embodiment, as with step S24 of the second embodiment, phase distribution machine learning unit 33 optimizes the phase distribution, which has been generated in step S22, of each of the plurality of holographic optical elements 44, 45 of holographic optical system model 22 for the plurality of wavelength components 50a, 50b, 50c so as to implement the functions of the holographic optical system more accurately. Phase distribution machine learning unit 33 provides the optimized phase distribution for each of the plurality of wavelength components 50a, 50b, 50c to each of the plurality of holographic optical elements 44, 45.

### <Holographic Optical System Designing Program 60>

A holographic optical system designing program 60 (see Fig. 27) causes processor 12 (see Fig. 27) to perform the method of designing the holographic optical system according to the present embodiment. A computer-readable recording medium (non-transitory computer-readable recording medium such as storage medium 18) of the present embodiment may store a program such as holographic optical system designing program 60.

The method of designing the holographic optical system and holographic optical system designing program 60 according to the present embodiment exhibit the following effects in addition to the effects of the method of designing the holographic optical system and holographic optical system designing program 60 according to the second embodiment.

In the method of designing the holographic optical system using holographic optical system model 22 according to the present embodiment, holographic optical system model 22 includes input plane 41, the plurality of holographic optical elements 44, 45 arranged optically in series, and output plane 42. The method of designing the holographic optical system according to the present embodiment includes the step (step S21) of receiving optical condition 20 including the number of the plurality of holographic optical elements 44, 45, the size of each of the plurality of holographic optical elements 44, 45, the arrangements of input plane 41, the plurality of holographic optical elements 44, 45 and output plane 42, and the wavelengths of the plurality of wavelength components 50a, 50b, 50c traveling via the plurality of holographic optical elements 44, 45. The wavelengths of the plurality of wavelength components 50a, 50b, 50c are different from one another. The method of designing the holographic optical system according to the present embodiment includes the step (step S40) of generating the plurality of holographic optical system sub-models 23a, 23b, 23c. Each of the plurality of holographic optical system sub-models 23a, 23b, 23c includes input plane 41, the plurality of holographic optical elements 44, 45, and output plane 42. Each of the plurality of holographic optical system sub-models 23a, 23b, 23c satisfies the number of the plurality of holographic optical elements 44, 45, the size of each of the plurality of holographic optical elements 44, 45, and the arrangements of input plane 41, the plurality of holographic optical elements 44, 45 and output plane 42 in optical condition 20. Each of the plurality of holographic optical system sub-models 23a, 23b, 23c is a holographic optical system sub-model for a corresponding wavelength component of the plurality of wavelength components 50a, 50b, 50c. Input plane 41, the plurality of holographic optical elements 44, 45, and output plane 42 of each of the plurality of holographic optical system sub-models 23a, 23b, 23c are arranged to avoid the zeroth-order diffracted light from being overlapped with output plane 42 of each of the plurality of holographic optical system sub-models 23a, 23b, 23c, the zeroth-order diffracted light being generated at each of the plurality of holographic optical elements 44, 45 of each of the plurality of holographic optical system sub-models 23a, 23b, 23c by the corresponding wavelength component traveling from input plane 41 of each of the plurality of holographic optical system sub-models 23a, 23b, 23c toward output plane 42 of each of the plurality of holographic optical system sub-models 23a, 23b, 23c via the plurality of holographic optical elements 44, 45 of each of the plurality of holographic optical system sub-models 23a, 23b, 23c. The method of designing the holographic optical system according to the present embodiment includes: the step (step S42) of setting the initial phase distribution for the corresponding wavelength component to each of the plurality of holographic optical elements 44, 45 of the plurality of holographic optical system sub-models 23a, 23b, 23c so as to allow the corresponding wavelength component to travel from input plane 41 of each of the plurality of holographic optical system sub-models 23a, 23b, 23c via the plurality of holographic optical elements 44, 45 of each of the plurality of holographic optical system sub-models 23a, 23b, 23c and exit to output plane 42 of each of the plurality of holographic optical system sub-models 23a, 23b, 23c; the step (step S43) of performing the machine learning for each of the plurality of holographic optical system sub-models 23a, 23b, 23c in each of which the initial phase distribution has been set, by optimizing the phase distribution of each of the plurality of holographic optical elements 44, 45 of each of the plurality of holographic optical system sub-models 23a, 23b, 23c for the corresponding wavelength component; and the step (step S22) of generating holographic optical system model 22 from the plurality of holographic optical system sub-models 23a, 23b, 23c having been through the machine learning. Input plane 41, the plurality of holographic optical elements 44, 45, and output plane 42 of holographic optical system model 22 are arranged to avoid the zeroth-order diffracted light from being overlapped with output plane 42 of holographic optical system model 22, the zeroth-order diffracted light being generated at each of the plurality of holographic optical elements 44, 45 of holographic optical system model 22 by the plurality of wavelength components 50a, 50b, 50c traveling from input plane 41 of holographic optical system model 22 toward output plane 42 of holographic optical system model 22 via the plurality of holographic optical elements 44, 45 of holographic optical system model 22. The method of designing the holographic optical system according to the present embodiment includes the step (step S24) of performing the machine learning for the holographic optical system model by optimizing the phase distribution of each of the plurality of holographic optical elements 44, 45 of holographic optical system model 22 with respect to the plurality of wavelength components 50a, 50b, 50c.

The size of memory 13 (see Fig. 27) necessary for the machine learning for each of the plurality of holographic optical system sub-models 23a, 23b, 23c is smaller than the size of memory 13 necessary for the machine learning for holographic optical system model 22. Further, in the present embodiment, since holographic optical system model 22 is generated from the plurality of holographic optical system sub-models 23a, 23b, 23c having been individually through the machine learning, an amount of computation necessary for the machine learning for holographic optical system model 22 is reduced. Therefore, the holographic optical system in which the zeroth-order diffracted light is prevented from being overlapped with output plane 42 can be designed more efficiently or faster.

Holographic optical system designing program 60 according to the present embodiment causes processor 12 to perform each step of the method of designing the holographic optical system according to the present embodiment. Therefore, the holographic optical system in which the zeroth-order diffracted light is prevented from being overlapped with output plane 42 can be designed more efficiently or faster.

### REFERENCE SIGNS LIST

1 holographic optical system designing device; 11 input device; 12 processor; 13 memory; 14 display; 16 network controller; 17 storage medium drive; 18 storage medium; 19 storage; 20 optical condition; 21, 22 holographic optical system model; 23a, 23b, 23c holographic optical system sub-model; 24, 25, 26, 27, 28 training data set; 24a, 25a, 26a, 27a, 28a training data; 24b, 25b, 26b, 27b, 28b input training data; 24c, 25c, 26c, 27c, 28c output training data; 30 optical condition reception unit; 31 holographic optical system model generation unit; 32 initial phase distribution setting unit; 33 phase distribution machine learning unit; 35 holographic optical system sub-model generation unit; 36 holographic optical system sub-model selection unit; 37 sub-model machine learning end determination unit; 41 input plane; 42 output plane; 44, 45, 46, 47 holographic optical element; 44p, 45p pixel; 50 light; 50a, 50b, 50c wavelength component; 52, 54 optical path; 53, 53a, 53b, 53c, 55, 55a, 55b, 55c zeroth-order diffracted light; 56, 57 optical axis; 60 holographic optical system designing program; 61 phase distribution optimization module; 63a, 63b, 64a, 64b, 65a, 65b, 66a, 66b straight line; 71, 72, 73 wavelength component extraction unit.

## Claims

1. A method of designing a holographic optical system using a holographic optical system model (21, 22), the holographic optical system model including an input plane (41), a plurality of holographic optical elements (44, 45, 46, 47) arranged optically in series, and an output plane (42), the method comprising the steps of:
receiving (S1, S21) an optical condition (20) including the number of the plurality of holographic optical elements, a size of each of the plurality of holographic optical elements, arrangements of the input plane, the plurality of holographic optical elements and the output plane, and a wavelength of light traveling via each of the plurality of holographic optical elements;
generating (S2, S22) the holographic optical system model (21) that satisfies the number of the plurality of holographic optical elements (44, 45, 46, 47), the size of each of the plurality of holographic optical elements, and the arrangements of the input plane (41), the plurality of holographic optical elements and the output plane (42) in the optical condition, the input plane, the plurality of holographic optical elements, and the output plane being arranged to avoid zeroth-order diffracted light (53, 55) from being overlapped with the output plane (42), the zeroth-order diffracted light being generated at each of the plurality of holographic optical elements by the light (50) traveling from the input plane (41) toward the output plane (42) via the plurality of holographic optical elements (44, 45, 46, 47),
setting (S3, S23) an initial phase distribution to each of the plurality of holographic optical elements (44, 45, 46, 47) so as to allow the light (50) to travel from the input plane (41) via the plurality of holographic optical elements (44, 45, 46, 47) and exit to the output plane (42), and
performing (S4, S24) machine learning for the holographic optical system model in which the initial phase distribution has been set, by optimizing a phase distribution of each of the plurality of holographic optical elements (44, 45, 46, 47) with respect to the light (50).

2. The method of designing the holographic optical system according to claim 1, wherein the light (50) includes a plurality of wavelength components (50a, 50b, 50c) having wavelengths different from each other.

3. The method of designing the holographic optical system according to claim 2, wherein
in the step (S23) of setting the initial phase distribution, an initial phase distribution for each of the plurality of wavelength components is set to each of the plurality of holographic optical elements so as to allow each of the plurality of wavelength components to travel from the input plane via the plurality of holographic optical elements and exit to the output plane, and
in the step (S24) of performing the machine learning for the holographic optical system model, a phase distribution of each of the plurality of holographic optical elements for each of the plurality of wavelength components is optimized by the machine learning.

4. A method of designing a holographic optical system using a holographic optical system model (22), the holographic optical system model including an input plane (41), a plurality of holographic optical elements (44, 45, 46, 47) arranged optically in series, and an output plane (42), the method comprising the steps of:
receiving (S21) an optical condition (20) including the number of the plurality of holographic optical elements (44, 45, 46, 47), a size of each of the plurality of holographic optical elements, arrangements of the input plane (41), the plurality of holographic optical element (44, 45, 46, 47) and the output plane (42), and wavelengths of a plurality of wavelength component (50a, 50b, 50c) traveling via the plurality of holographic optical elements (44, 45, 46, 47), the wavelengths of the plurality of wavelength components being different from each other;
generating (S40) a plurality of holographic optical system sub-models (23a, 23b, 23c) each of the plurality of holographic optical system sub-models including the input plane, the plurality of holographic optical elements, and the output plane, each of the plurality of holographic optical system sub-models satisfying the number of the plurality of holographic optical elements, the size of each of the plurality of holographic optical elements, and the arrangements of the input plane, the plurality of holographic optical elements and the output plane in the optical condition, each of the plurality of holographic optical system sub-models being a holographic optical system sub-model for a corresponding wavelength component of the plurality of wavelength components, the input plane, the plurality of holographic optical elements, and the output plane of each of the plurality of holographic optical system sub-models being arranged to avoid zeroth-order diffracted light (53a, 53b, 53c, 55a, 55b, 55c)
from being overlapped with the output plane of each of the plurality of holographic optical system sub-models, the zeroth-order diffracted light being generated at each of the plurality of holographic optical elements of each of the plurality of holographic optical system sub-models by the corresponding wavelength component traveling from the input plane of each of the plurality of holographic optical system sub-models toward the output plane of each of the plurality of holographic optical system sub-models via the plurality of holographic optical elements of each of the plurality of holographic optical system sub-models;
setting (S41-S44) an initial phase distribution for the corresponding wavelength component to each of the plurality of holographic optical elements of each of the plurality of holographic optical system sub-models so as to allow the corresponding wavelength component to travel from the input plane of each of the plurality of holographic optical system sub-models via the plurality of holographic optical elements of each of the plurality of holographic optical system sub-models and exit to the output plane of each of the plurality of holographic optical system sub-models;
performing (S41-S44) machine learning for each of the plurality of holographic optical system sub-models in each of which the initial phase distribution has been set, by optimizing a phase distribution of each of the plurality of holographic optical elements of each of the plurality of holographic optical system sub-models for the corresponding wavelength component;
generating (S22) the holographic optical system model (22) from the plurality of holographic optical system sub-models (23a, 23b, 23c) having been through the machine learning, the input plane, the plurality of holographic optical elements and the output plane of the holographic optical system model being arranged to avoid zeroth-order diffracted light from being overlapped with the output plane of the holographic optical system model, the zeroth-order diffracted light being generated at each of the plurality of holographic optical elements of the holographic optical system model by each of the plurality of wavelength components traveling from the input plane of the holographic optical system model toward the output plane of the holographic optical system model via the plurality of holographic optical elements of the holographic optical system model; and
performing (S24) machine learning for the holographic optical system model by optimizing a phase distribution of each of the plurality of holographic optical elements of the holographic optical system model with respect to each of the plurality of wavelength components.

5. The method of designing the holographic optical system according to claim 1, wherein
the plurality of holographic optical elements (44, 45, 46, 47) include a first holographic optical element having a first size and a second holographic optical element having a second size different from the first size, and
in the step of setting the initial phase distribution to each of the plurality of holographic optical elements, the initial phase distribution is set to each of the plurality of holographic optical elements so as to apply the light to 80% or more of the first size and 80% or more of the second size.

6. The method of designing the holographic optical system according to claim 1, wherein the plurality of holographic optical elements (44, 45, 46, 47) include a plurality of reflection type holographic optical elements that form a folded optical path (52, 54).

7. A holographic optical system designing program (60) causing a processor to perform each step of the method of designing the holographic optical system according to any one of claims 1 to 6.

## Patentansprüche

1. Verfahren zum Entwerfen eines holographischen optischen Systems unter Verwendung eines holographischen optischen Systemmodells (21, 22), wobei das holographische optische Systemmodell eine Eingangsebene (41), mehrere holographische optische Elemente (44, 45, 46, 47), die optisch in Reihe angeordnet sind, und eine Ausgangsebene (42) einschließt, wobei das Verfahren die folgenden Schritte umfasst:
Empfangen (S1, S21) einer optischen Bedingung (20) einschließlich der Anzahl der mehreren holographischen optischen Elemente, einer Größe jedes der mehreren holographischen optischen Elemente, Anordnungen der Eingangsebene, der mehreren holographischen optischen Elemente und der Ausgangsebene, und einer Wellenlänge von Licht, das sich durch jedes der mehreren holographischen optischen Elemente ausbreitet;
Generieren (S2, S22) des holographischen optischen Systemmodells (21), das die Anzahl der mehreren holographischen optischen Elemente (44, 45, 46, 47), die Größe jedes der mehreren holographischen optischen Elemente und die Anordnungen der Eingangsebene (41), der mehreren holographischen optischen Elemente und der Ausgangsebene (42) in der optischen Bedingung erfüllt, wobei die Eingangsebene, die mehreren holographischen optischen Elemente und die Ausgangsebene angeordnet sind, um zu vermeiden, dass gebeugtes Licht nullter Ordnung (53, 55) mit der Ausgangsebene (42) überlappt, wobei das gebeugte Licht nullter Ordnung an jedem der mehreren holographischen optischen Elemente durch das Licht (50) generiert wird, das sich von der Eingangsebene (41) über die mehreren holographischen optischen Elemente (44, 45, 46, 47) zu der Ausgangsebene (42) bewegt,
Einstellen (S3, S23) einer anfänglichen Phasenverteilung auf jedes der mehreren holographischen optischen Elemente (44, 45, 46, 47), um zu ermöglichen, dass das Licht (50) sich von der Eingangsebene (41) über die mehreren holographischen optischen Elemente (44, 45, 46, 47) bewegt und zu der Ausgangsebene (42) austritt, und
Durchführen (S4, S24) von maschinellem Lernen für das holographische optische Systemmodell, in dem die anfängliche Phasenverteilung eingestellt wurde, durch Optimieren einer Phasenverteilung jedes der mehreren holographischen optischen Elemente (44, 45, 46, 47) in Bezug auf das Licht (50).

2. Verfahren zum Entwerfen des holographischen optischen Systems nach Anspruch 1, wobei das Licht (50) mehrere Wellenlängenkomponenten (50a, 50b, 50c) mit voneinander verschiedenen Wellenlängen einschließt.

3. Verfahren zum Entwerfen des holographischen optischen Systems nach Anspruch 2, wobei
in dem Schritt (S23) des Einstellens der anfänglichen Phasenverteilung eine anfängliche Phasenverteilung für jede der mehreren Wellenlängenkomponenten auf jedes der mehreren holographischen optischen Elemente eingestellt wird, um zu ermöglichen, dass jede der mehreren Wellenlängenkomponenten sich von der Eingangsebene durch die mehreren holographischen optischen Elemente ausbreitet und zu der Ausgangsebene austritt, und
in dem Schritt (S24) des Durchführens des maschinellen Lernens für das holographische optische Systemmodell eine Phasenverteilung jedes der mehreren holographischen optischen Elemente für jede der mehreren Wellenlängenkomponenten durch das maschinelle Lernen optimiert wird.

4. Verfahren zum Entwerfen eines holographischen optischen Systems unter Verwendung eines holographischen optischen Systemmodells (22), wobei das holographische optische Systemmodell eine Eingangsebene (41), mehrere holographische optische Elemente (44, 45, 46, 47), die optisch in Reihe angeordnet sind, und eine Ausgangsebene (42) einschließt, wobei das Verfahren die folgenden Schritte umfasst:
Empfangen (S21) einer optischen Bedingung (20) einschließlich der Anzahl der mehreren holographischen optischen Elemente (44, 45, 46, 47), einer Größe jedes der mehreren holographischen optischen Elemente, Anordnungen der Eingangsebene (41), der mehreren holographischen optischen Elemente (44, 45, 46, 47) und der Ausgangsebene (42), und Wellenlängen mehrerer Wellenlängenkomponenten (50a, 50b, 50c), die sich über die mehreren holographischen optischen Elemente (44, 45, 46, 47) bewegen, wobei sich die Wellenlängen der mehreren Wellenlängenkomponenten voneinander unterscheiden;
Generieren (S40) mehrerer holographischer optischer System-Untermodelle (23a, 23b, 23c), wobei jedes der mehreren holographischen optischen System-Untermodelle die Eingangsebene, die mehreren holographischen optischen Elemente und die Ausgangsebene einschließt, wobei jedes der mehreren holographischen optischen System-Untermodelle die Anzahl der mehreren holographischen optischen Elemente, die Größe jedes der mehreren holographischen optischen Elemente, und die Anordnungen der Eingangsebene, der mehreren holographischen optischen Elemente und der Ausgangsebene in der optischen Bedingung erfüllt, wobei jedes der mehreren holographischen optischen System-Untermodelle ein holographisches optisches System-Untermodell für eine entsprechende Wellenlängenkomponente der mehreren Wellenlängenkomponenten ist, wobei die Eingangsebene, die mehreren holographischen optischen Elemente und die Ausgangsebene jedes der mehreren holographischen optischen System-Untermodelle angeordnet sind, um zu vermeiden, dass gebeugtes Licht nullter Ordnung (53a, 53b, 53c, 55a, 55b, 55c) mit der Ausgangsebene jedes der mehreren holographischen optischen System-Untermodelle überlappt, wobei das gebeugte Licht nullter Ordnung an jedem der mehreren holographischen optischen Elemente jedes der mehreren holographischen optischen System-Untermodelle durch die entsprechende Wellenlängenkomponente generiert wird, die sich von der Eingangsebene jedes der mehreren holographischen optischen System-Untermodelle zu der Ausgangsebene jedes der mehreren holographischen optischen System-Untermodelle über die mehreren holographischen optischen Elemente jedes der mehreren holographischen optischen System-Untermodelle bewegt;
Einstellen (S41-S44) einer anfänglichen Phasenverteilung für die entsprechende Wellenlängenkomponente auf jedes der mehreren holographischen optischen Elemente jedes der mehreren holographischen optischen System-Untermodelle, um zu ermöglichen, dass die entsprechende Wellenlängenkomponente sich von der Eingangsebene jedes der mehreren holographischen optischen System-Untermodelle über die mehreren holographischen optischen Elemente jedes der mehreren holographischen optischen System-Untermodelle bewegt und zu der Ausgangsebene jedes der mehreren holographischen optischen System-Untermodelle austritt;
Durchführen (S41-S44) von maschinellem Lernen für jedes der mehreren holographischen optischen System-Untermodelle, wobei in jedem davon die anfängliche Phasenverteilung eingestellt wurde, durch Optimieren einer Phasenverteilung jedes der mehreren holographischen optischen Elemente jedes der mehreren holographischen optischen System-Untermodelle für die entsprechende Wellenlängenkomponente;
Generieren (S22) des holographischen optischen Systemmodells (22) aus den mehreren holographischen optischen System-Untermodellen (23a, 23b, 23c), die das maschinelle Lernen durchlaufen haben, wobei die Eingangsebene, die mehreren holographischen optischen Elemente und die Ausgangsebene des holographischen optischen Systemmodells angeordnet sind, um zu vermeiden, dass gebeugtes Licht nullter Ordnung mit der Ausgangsebene des holographischen optischen Systemmodells überlappt, wobei das gebeugte Licht nullter Ordnung an jedem der mehreren holographischen optischen Elemente des holographischen optischen Systemmodells durch jede der mehreren Wellenlängenkomponenten generiert wird, die sich von der Eingangsebene des holographischen optischen Systemmodells zu der Ausgangsebene des holographischen optischen Systemmodells über die mehreren holographischen optischen Elemente des holographischen optischen Systemmodells bewegen; und
Durchführen (S24) von maschinellem Lernen für das holographische optische Systemmodell durch Optimieren einer Phasenverteilung jedes der mehreren holographischen optischen Elemente des holographischen optischen Systemmodells in Bezug auf jede der mehreren Wellenlängenkomponenten.

5. Verfahren zum Entwerfen des holographischen optischen Systems nach Anspruch 1, wobei
die mehreren holographischen optischen Elemente (44, 45, 46, 47) ein erstes holographisches optisches Element mit einer ersten Größe und ein zweites holographisches optisches Element mit einer zweiten Größe, die sich von der ersten Größe unterscheidet, einschließen, und
in dem Schritt des Einstellens der anfänglichen Phasenverteilung auf jedes der mehreren holographischen optischen Elemente die anfängliche Phasenverteilung auf jedes der mehreren holographischen optischen Elemente eingestellt wird, um das Licht auf 80 % oder mehr der ersten Größe und 80 % oder mehr der zweiten Größe e zu richten.

6. Verfahren zum Entwerfen des holographischen optischen Systems nach Anspruch 1, wobei die mehreren holographischen optischen Elemente (44, 45, 46, 47) mehrere holographische optische Elemente vom Reflexionstyp einschließen, die einen gefalteten optischen Pfad (52, 54) bilden.

7. Programm zum Entwerfen eines holographischen optischen Systems (60), das bewirkt, dass ein Prozessor jeden Schritt des Verfahrens zum Entwerfen des holographischen optischen Systems nach einem der Ansprüche 1 bis 6 durchführt.

## Revendications

1. Procédé de conception d'un système optique holographique utilisant un modèle de système optique holographique (21, 22), le modèle de système optique holographique comportant un plan d'entrée (41), une pluralité d'éléments optiques holographiques (44, 45, 46, 47) agencés optiquement en série, et un plan de sortie (42), le procédé comprenant les étapes suivantes :
réception (S1, S21) d'une condition optique (20) comportant le nombre d'éléments de la pluralité d'éléments optiques holographiques, une taille de chaque élément de la pluralité d'éléments optiques holographiques, des agencements du plan d'entrée, de la pluralité d'éléments optiques holographiques et du plan de sortie, et une longueur d'onde de lumière se déplaçant en passant par chaque élément de la pluralité d'éléments optiques holographiques ;
génération (S2, S22) du modèle de système optique holographique (21) qui satisfait le nombre d'éléments de la pluralité d'éléments optiques holographiques (44, 45, 46, 47), la taille de chaque élément de la pluralité d'éléments optiques holographiques et les agencements du plan d'entrée (41), de la pluralité d'éléments optiques holographiques et du plan de sortie (42) dans la condition optique, le plan d'entrée, la pluralité d'éléments optiques holographiques et le plan de sortie étant agencés pour éviter que de la lumière diffractée d'ordre zéro (53, 55) ne se superpose au plan de sortie (42), la lumière diffractée d'ordre zéro étant générée au niveau de chaque élément de la pluralité d'éléments optiques holographiques par la lumière (50) se déplaçant depuis le plan d'entrée (41) vers le plan de sortie (42) en passant par la pluralité d'éléments optiques holographiques (44, 45, 46, 47) ;
établissement (S3, S23) d'une distribution de phase initiale pour chaque élément de la pluralité d'éléments optiques holographiques (44, 45, 46, 47) de manière à permettre à la lumière (50) de se déplacer depuis le plan d'entrée (41) en passant par la pluralité d'éléments optiques holographiques (44, 45, 46, 47) et sortir par le plan de sortie (42) ; et
réalisation (S4, S24) d'un apprentissage automatique pour le modèle de système optique holographique dans lequel la distribution de phase initiale a été établie, par optimisation d'une distribution de phase de chaque élément de la pluralité d'éléments optiques holographiques (44, 45, 46, 47) par rapport à la lumière (50) .

2. Procédé de conception du système optique holographique selon la revendication 1, dans lequel la lumière (50) comporte une pluralité de composantes de longueur d'onde (50a, 50b, 50c) ayant des longueurs d'onde différentes les unes des autres.

3. Procédé de conception du système optique holographique selon la revendication 2, dans lequel
à l'étape (S23) d'établissement de la distribution de phase initiale, une distribution de phase initiale pour chaque composante de la pluralité de composantes de longueur d'onde est établie pour chaque élément de la pluralité d'éléments optiques holographiques de manière à permettre à chaque composante de la pluralité de composantes de longueur d'onde de se déplacer depuis le plan d'entrée en passant par la pluralité d'éléments optiques holographiques et sortir par le plan de sortie, et
à l'étape (S24) de réalisation de l'apprentissage automatique pour le modèle de système optique holographique, une distribution de phase de chaque élément de la pluralité d'éléments optiques holographiques pour chaque composante de la pluralité de composantes de longueur d'onde est optimisée par l'apprentissage automatique.

4. Procédé de conception d'un système optique holographique utilisant un modèle de système optique holographique (22), le modèle de système optique holographique comportant un plan d'entrée (41), une pluralité d'éléments optiques holographiques (44, 45, 46, 47) agencés optiquement en série, et un plan de sortie (42), le procédé comprenant les étapes suivantes :
réception (S21) d'une condition optique (20) comportant le nombre d'éléments de la pluralité d'éléments optiques holographiques (44, 45, 46, 47), une taille de chaque élément de la pluralité d'éléments optiques holographiques, des agencements du plan d'entrée (41), de la pluralité d'éléments optiques holographiques (44, 45, 46, 47) et du plan de sortie (42), et des longueurs d'onde d'une pluralité de composantes de longueur d'onde (50a, 50b, 50c) se déplaçant en passant par la pluralité d'éléments optiques holographiques (44, 45, 46, 47), les longueurs d'onde de la pluralité de composantes de longueur d'onde étant différentes les unes des autres ;
génération (S40) d'une pluralité de sous-modèles de système optique holographique (23a, 23b, 23c), chaque sous-modèle de la pluralité de sous-modèles de système optique holographique comportant le plan d'entrée, la pluralité d'éléments optiques holographiques et le plan de sortie, chaque sous-modèle de la pluralité de sous-modèles de système optique holographique satisfaisant le nombre d'éléments de la pluralité d'éléments optiques holographiques, la taille de chaque élément de la pluralité d'éléments optiques holographiques, et les agencements du plan d'entrée, de la pluralité d'éléments optiques holographiques et du plan de sortie dans la condition optique, chaque sous-modèle de la pluralité de sous-modèles de système optique holographique étant un sous-modèle de système optique holographique pour une composante de longueur d'onde correspondante de la pluralité de composantes de longueur d'onde, le plan d'entrée, la pluralité d'éléments optiques holographiques et le plan de sortie de chaque sous-modèle de la pluralité de sous-modèles de système optique holographique étant agencés pour éviter que de la lumière diffractée d'ordre zéro (53a, 53b, 53c, 55a, 55b, 55c) se superpose au plan de sortie de chaque sous-modèle de la pluralité de sous-modèles de système optique holographique, la lumière diffractée d'ordre zéro étant générée au niveau de chaque élément de la pluralité d'éléments optiques holographiques de chaque sous-modèle de la pluralité de sous-modèles de système optique holographique par la composante de longueur d'onde correspondante se déplaçant depuis le plan d'entrée de chaque sous-modèle de la pluralité de sous-modèles de système optique holographique vers le plan de sortie de chaque sous-modèle de la pluralité de sous-modèles de système optique holographique en passant par la pluralité d'éléments optiques holographiques de chaque sous-modèle de la pluralité de sous-modèles de système optique holographique ;
établissement (S41-S44) d'une distribution de phase initiale pour la composante de longueur d'onde correspondante pour chaque élément de la pluralité d'éléments optiques holographiques de chaque sous-modèle de la pluralité de sous-modèles de système optique holographique de manière à permettre à la composante de longueur d'onde correspondante de se déplacer depuis le plan d'entrée de chaque sous-modèle de la pluralité de sous-modèles de système optique holographique en passant par la pluralité d'éléments optiques holographiques de chaque sous-modèle de la pluralité de sous-modèles de système optique holographique et sortir par le plan de sortie de chaque sous-modèle de la pluralité de sous-modèles de système optique holographique ;
réalisation (S41-S44) d'un apprentissage automatique pour chaque sous-modèle de la pluralité de sous-modèles de système optique holographique dans chacun desquels la distribution de phase initiale a été établie, par optimisation d'une distribution de phase de chaque élément de la pluralité d'éléments optiques holographiques de chaque sous-modèle de la pluralité de sous-modèles de système optique holographique pour la composante de longueur d'onde correspondante ;
génération (S22) du modèle de système optique holographique (22) à partir de la pluralité de sous-modèles de système optique holographique (23a, 23b, 23c) passés par l'apprentissage automatique, le plan d'entrée, la pluralité d'éléments optiques holographiques et le plan de sortie du modèle de système optique holographique étant agencés pour éviter que de la lumière diffractée d'ordre zéro ne se superpose au plan de sortie du modèle de système optique holographique, la lumière diffractée d'ordre zéro étant générée au niveau de chaque élément de la pluralité d'éléments optiques holographiques du modèle de système optique holographique par chaque composante de la pluralité de composantes de longueur d'onde se déplaçant depuis le plan d'entrée du modèle de système optique holographique vers le plan de sortie du modèle de système optique holographique en passant par la pluralité d'éléments optiques holographiques du modèle de système optique holographique ; et
réalisation (S24) d'un apprentissage automatique pour le modèle de système optique holographique par optimisation d'une distribution de phase de chaque élément de la pluralité d'éléments optiques holographiques du modèle de système optique holographique par rapport à chaque composante de la pluralité de composantes de longueur d'onde.

5. Procédé de conception du système optique holographique selon la revendication 1, dans lequel
la pluralité d'éléments optiques holographiques (44, 45, 46, 47) comporte un premier élément optique holographique ayant une première taille et un deuxième élément optique holographique ayant une deuxième taille différente de la première taille, et
à l'étape d'établissement de la distribution de phase initiale pour chaque élément de la pluralité d'éléments optiques holographiques, la distribution de phase initiale est établie pour chaque élément de la pluralité d'éléments optiques holographiques de manière à appliquer la lumière à au moins 80 % de la première taille et au moins 80 % de la deuxième taille.

6. Procédé de conception du système optique holographique selon la revendication 1, dans lequel la pluralité d'éléments optiques holographiques (44, 45, 46, 47) comporte une pluralité d'éléments optiques holographiques de type réflexion qui forment un chemin optique replié (52, 54).

7. Programme de conception de système optique holographique (60) amenant un processeur à réaliser chaque étape du procédé de conception du système optique holographique selon l'une quelconque des revendications 1 à 6.
